(19) Europäisches Patentamt
European Patent Office
Office européen des brevets

(11) EP 4 651 578 A1

(12) EUROPEAN PATENT APPLICATION
published in accordance with Art. 153(4) EPC

(43) Date of publication:
19.11.2025 Bulletin 2025/47

(51) International Patent Classification (IPC):
H04W 52/02 (2009.01)   H04W 68/02 (2009.01)
H04W 72/231 (2023.01)   H04W 76/28 (2018.01)

(21) Application number: 24760564.5

(22) Date of filing: 21.02.2024

(86) International application number:
PCT/KR2024/002252

(87) International publication number:
WO 2024/177375 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.02.2023  KR 20230024544

(71) Applicant: Samsung Electronics Co., Ltd.
Suwon-si, Gyeonggi-do 16677 (KR)

(72) Inventors:
• YI, Junyung
  Suwon-si Gyeonggi-do 16677 (KR)
• KIM, Youngbum
  Suwon-si Gyeonggi-do 16677 (KR)
• RYU, Hyunseok
  Suwon-si Gyeonggi-do 16677 (KR)
• LEE, Jaewon
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND DEVICE FOR PERFORMING ENERGY SAVING IN WIRELESS COMMUNICATION SYSTEM**

(57) A user equipment (UE) in a wireless communication system, according to one embodiment of the present disclosure, receives, from a base station, a radio resource control (RRC) message including first information configuring a discontinuous reception (DRX) cycle, a second information configuring paging monitoring, and third information configuring a paging occasion, identifies at least one paging frame on the basis of the first information and the second information, and receives, from the base station, a paging message on the at least one paging frame, wherein the third information can indicate a pattern of the paging occasion continuously positioned from a start point of the at least one paging frame.

```
START
    ↓
1901  RECEIVE eDRX/iDRX ALIGNMENT AND PAGING
      MONITORING RESOURCE CONFIGURATION
      INFORMATION THROUGH HIGHER LAYER
      SIGNALING (RRC, SIB)
    ↓
1902  RECEIVE eDRX/iDRX ALIGNMENT AND PAGING
      MONITORING RESOURCE ALIGNMENT
      CONFIGURATION INFORMATION THROUGH
      HIGHER LAYER SIGNALING OR PAGING MESSAGE
    ↓
1903  PERFORM PAGING MONITORING OPERATION,
      BASED ON CONFIGURED INFORMATION
    ↓
END
```

FIG.19

EP 4 651 578 A1

## Description

[Technical Field]

The disclosure generally relates to a wireless communication system and, more particularly, to a method and a apparatus for performing energy saving in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve into various formfactors, such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 μ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Particularly, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

With the recent development of 5G or 6G communication systems considering environmental factors, various technologies for reducing energy consumption of base stations are being considered.

[Disclosure of Invention]

[Technical Problem]

Based on the discussion as described above, the disclosure is to provide a device and a method for performing energy saving in a wireless communication system.

According to various embodiments of the disclosure, in order to reduce energy consumption of a base station in a wireless communication system, a method for operating cell-common extended discontinuous reception (eDRX)/idle-mode discontinuous reception (iDRX) of the base station and operating cell-common paging is provided.

According to various embodiments of the disclosure, for energy saving of a base station, a method for configuring cell-common eDRX/iDRX of the base station through higher layer signaling (e.g., radio resource control (RRC) and system information block (SIB)) and a method for determining a DRx cycle of a terminal according to configured cell-common eDRX/iDRX are defined. In addition, according to various embodiments, a method for configuring a new paging resource pattern to allocate a paging resource to a specific resource interval and a method for determining a paging resource of a terminal accordingly are provided. Accordingly, a base station may maintain an inactivity state for a longer period of time to save energy.

The technical subjects pursued in the disclosure may not be limited to the above-mentioned technical subjects, and other technical subjects which are not mentioned herein may be clearly understood from the following description by those skilled in the art to which the disclosure pertains.

[Solution to Problem]

According to various embodiments of the disclosure, a method for processing a control signal in a wireless communication system may include: receiving a first control signal transmitted from a base station; processing the received first control signal; and transmitting a second control signal generated based on the processing to the base station.

[Advantageous Effects of Invention]

Through embodiments of the disclosure, a paging transmission method of a base station in a 5G mobile communication system is defined, so that the problem of excessive energy consumption can be resolved and high energy efficiency can be achieved.

Through embodiments of the disclosure, an eDRX/iDRX and paging resource configuration method for energy saving of a base station in a 5G mobile communication system is defined, so that the problem of excessive energy consumption can be resolved and high energy efficiency can be achieved.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a radio resource region in a wireless communication system according to various embodiments of the disclosure.

FIG. 2 illustrates a slot structure in a wireless communication system according to an embodiment of the disclosure.

FIG. 3 illustrates an example of a beam sweeping operation and a time domain mapping structure of a synchronization signal according to various embodiments of the disclosure.

FIG. 4 illustrates a synchronization signal block in a wireless communication system according to various embodiments of the disclosure.

FIG. 5 illustrates various transmission cases of a synchronization signal block in a frequency band below 6GHz considered in a wireless communication system according to various embodiments of the disclosure.

FIG. 6 illustrates transmission cases of a synchronization signal block in a frequency band of 6GHz or above considered in a wireless communication system according to an embodiment of the disclosure.

FIG. 7 illustrates transmission cases of a synchronization signal block according to a subcarrier spacing within a time of 5ms in a wireless communication system according to various embodiments of the disclosure.

FIG. 8 illustrates an example of demodulation reference signal (DMRS) patterns (type 1 and type 2) used for communication between a base station and a UE according to various embodiments of the disclosure.

FIG. 9 illustrates an example of channel estimation using a DMRS received from one physical uplink shared channel (PUSCH) in a time band according to various embodiments of the disclosure.

FIG. 10 illustrates a method for reconfiguring a synchronization signal block (SSB) via dynamic signaling according to various embodiments of the disclosure.

FIG. 11 illustrates a method for reconfiguring a bandwidth part (BWP) and a BW via dynamic signaling according to various embodiments of the disclosure.

FIG. 12 illustrates a method for reconfiguring discontinuous reception (DRX) via dynamic signaling according to various embodiments of the disclosure.

FIG. 13 illustrates a base station antenna adaptation method for energy saving according to various embodiments of the disclosure.

FIG. 14 illustrates a discontinuous transmission (DTX) method for base station energy saving according to various embodiments of the disclosure.

FIG. 15 illustrates an operation of a base station according to a wake-up signal, according to various embodiments of the disclosure.

FIG. 16 illustrates a method for newly configuring a paging hyperframe, according to various embodiments of the disclosure.

FIG. 17 illustrates a method for newly configuring a paging time window (PTW) according to various embodiments of the disclosure.

FIG. 18 illustrates a method for newly configuring a paging frame and a paging occasion, according to various embodiments of the disclosure.

FIG. 19 illustrates an operation flow of a terminal for performing energy saving, according to various embodiments of the disclosure.

FIG. 20 illustrates an operation flow of a base station for performing energy saving, according to various embodiments of the disclosure.

FIG. 21 illustrates a structure of a UE according to various embodiments of the disclosure.

FIG. 22 illustrates a structure of a base station according to various embodiments of the disclosure.

[Mode for the Invention]

Hereinafter, embodiments of the disclosure will be described in detail with reference to the accompanying drawings. In describing embodiments of the disclosure below, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

Hereinafter, embodiments of the disclosure will be described in detail in conjunction with the accompanying drawings. Although methods and devices as described below in the embodiments of the disclosure are proposed as an example of methods and devices for improving uplink coverage when performing a random access procedure, the methods and devices are not limited to the respective embodiments, and may be applied to methods for configuring frequency resources corresponding to other channels, by using all or some of one or more embodiments in combination. Therefore, based on determinations by those skilled in the art, the embodiments of the disclosure may be applied through some modifications without significantly departing from the scope of the disclosure.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

A wireless communication system is advancing to a broadband wireless communication system for providing high-speed and high-quality packet data services using communication standards, such as high-speed packet access (HSPA) of 3GPP, LTE-Advanced (LTE-A), LTE-Pro, high-rate packet data (HRPD) of 3GPP2, ultra-mobile broadband (UMB), IEEE 802.17e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UE supporting mMTC requires wider coverage than those of other services provided by the 5G communication system because the UEs are likely to be located in a shadow area, such as a basement of a building, which is not covered by the cell due to the nature of the service. The UE supporting mMTC must be configured to be inexpensive, and requires a very long battery life-time such as 10 to 15 years because it is difficult to frequently replace the battery of the UE.

Lastly, URLLC is a cellular-based mission-critical wireless communication service. For example, URLLC may be considered as services used for remote control for robots or machinery, industrial automation, unmanned aerial vehicles, remote health care, or emergency alert. Thus, URLLC must provide communication with ultra-low latency and ultra-high reliability. For example, a service supporting URLLC must satisfy an air interface latency of less than 0.5 ms, and must also require a packet error rate of 10$^{-5}$ or less. Therefore, for the services supporting URLLC, a 5G system must provide a transmit time interval (TTI) shorter than those of other services, and must also assign a large number of resources in a frequency band in order to secure reliability of a communication link.

The three services in the 5G communication system (hereinafter may be interchangeably used with "5G system"), that is, eMBB, URLLC, and mMTC, may be multiplexed and transmitted in a single system. In this case, different transmission/reception techniques and transmission/reception parameters may be used between services in order to satisfy different requirements of the respective services.

Hereinafter, a frame structure of a 5G system will be described in more detail with reference to the accompanying drawings. Hereinafter, a structure of a 5G system will be described as an example of a wireless communication to which the disclosure is applied for the sake of descriptive convenience, but the embodiments of the disclosure may also be applied in the same or similar manner to 5G or higher systems or other communication systems to which the disclosure is applicable.

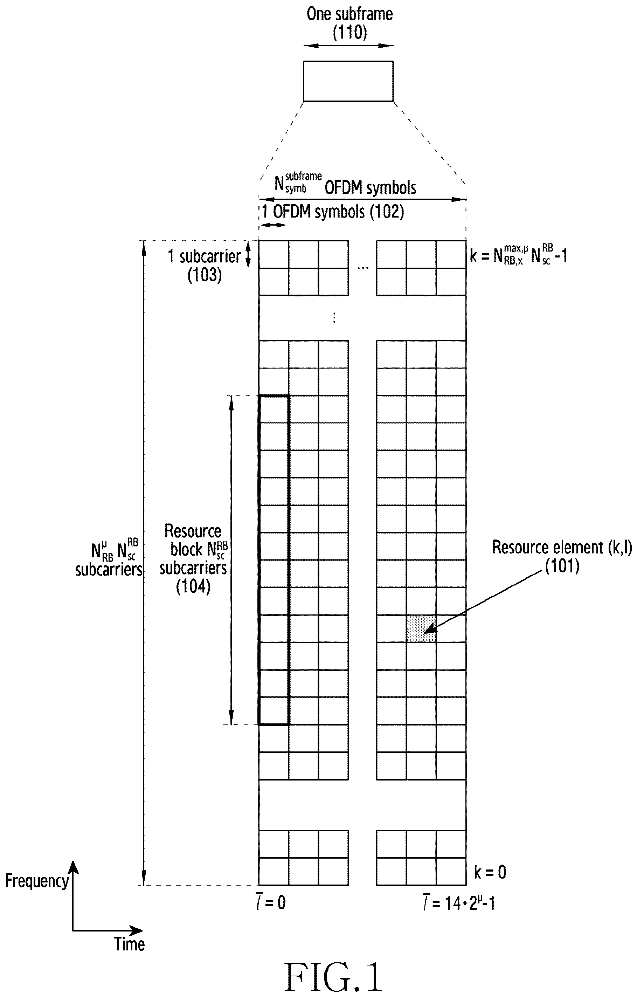

FIG. 1 illustrates a radio resource region in a wireless communication system according to various embodiments of the disclosure.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol (or discrete Fourier transform spread OFDM (DFT-s-OFDM)) 102 on the time axis and one subcarrier 103 on the frequency axis. In the frequency domain, $N_{SC}^{RB}$ (which denotes the number of subcarriers per resource block (RB), for example, 12) consecutive REs may constitute one resource block 104. Also, in the time domain, $N_{symb}^{subframe}$ (which denotes the number of symbols per subframe) consecutive OFDM symbols may constitute one subframe 110.

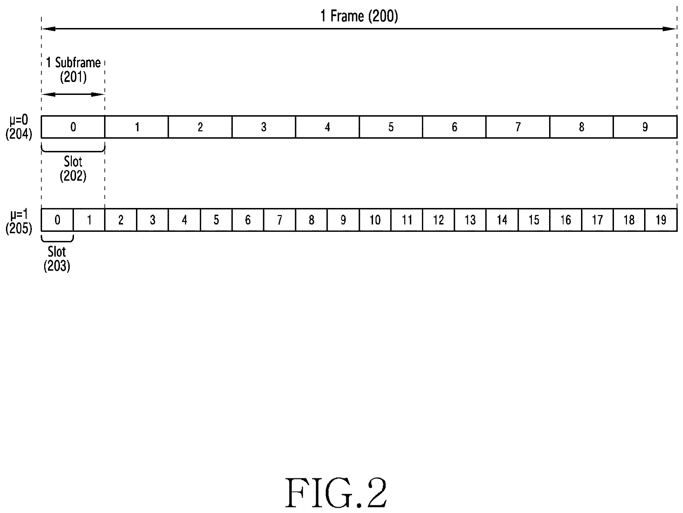

FIG. 2 illustrates a slot structure in a wireless communication system according to various embodiments of the disclosure.

In FIG. 2, an example of a slot structure including a frame 200, a subframe 201, and a slot 202 or 203 is illustrated. One frame 200 may be defined as 10ms. One subframe 201 may be defined as 1ms, and thus one frame 200 may include a total of ten subframes 201. One slot 202 or 203 may be defined as 14 OFDM symbols (for example, the number of symbols per one slot $N_{symb}^{slot}=14$). One subframe 201 may include one or multiple slots 202 and 203, and the number of slots 202 or 203 per one subframe 201 may vary depending on configuration values $\mu$ for the subcarrier spacing (SCS) 204 or 205.

Referring to FIG. 2, FIG. 2 illustrates a slot structure in a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots (for example, slots 203). For example, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below..

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N^{slot}_{symb}$ | $N^{frame,\mu}_{slot}$ | $N^{subframe,\mu}_{slot}$ |
|---|---|---|---|
| 4 | 14 | 160 | 16 |
| 5 | 14 | 320 | 32 |
| 6 | 14 | 640 | 64 |

In a 5G wireless communication system, a synchronization signal block (SSB) (hereinafter may be interchangeably used with "SS block" or "SS/physical broadcast channel (SS/PBCH) block") may be transmitted for the purposed of initial access of a UE. The SSB may include a primary synchronization signal (PSS), a secondary synchronization signal (SSS), and a PBCH.

During an initial access operation in which the UE accesses a system, the UE may first acquire downlink time and frequency domain synchronization from a synchronization signal via a cell search and may acquire a cell ID. The synchronization signal may include a PSS and an SSS. The UE may receive, from a base station, a PBCH for transmitting of a master information block (MIB) so as to acquire a basic parameter value and system information related to transmission and reception, such as a system bandwidth or related control information. Based on the acquired information, the UE may perform decoding of a physical downlink control channel (PDCCH) and a physical downlink shared channel (PDSCH) to acquire a system information block (SIB). Then, the UE may exchange UE identification-related information with the base station via a random-access operation, and may initially access a network via registration and authentication operations. Additionally, the UE may receive system information (system information block (SIB)) transmitted by the base station to acquire cell-common transmission and reception-related control information. The cell-common transmission and reception-related control information may include random access-related control information, paging-related control information, common control information for various physical channels, etc.

The synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

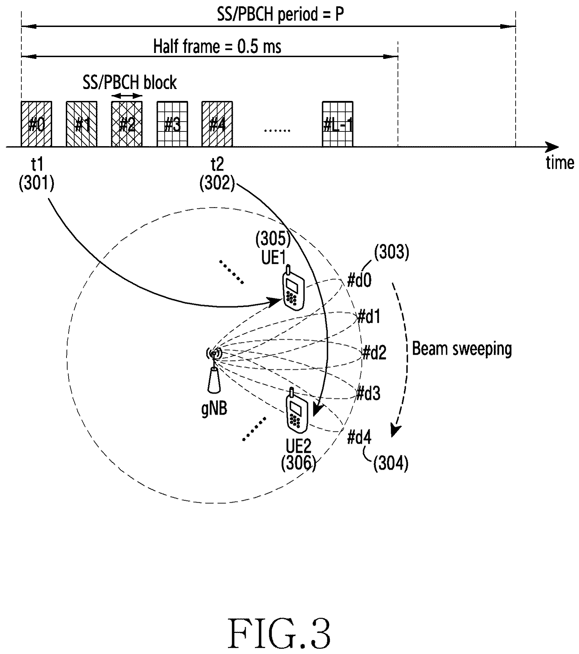

FIG. 3 illustrates an example of a beam sweeping operation and a time domain mapping structure of a synchronization signal according to various embodiments of the disclosure. For description purposes, the following elements may be defined with reference to FIG. 3.

- PSS: A signal which becomes a reference for DL time/frequency synchronization, and provides a part of cell ID information.
- SSS: An SSS serves as a reference for DL time/frequency synchronization, and provides the other part of the cell ID information. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating radio resource mapping information of a control channel, scheduling control information for a separate data channel for transmission of system information, a system frame number (SFN) which is a frame unit index that serves as a timing reference, and other information.
- SS/PBCH block (or SSB): An SS/PBCH block is configured by N OFDM symbols and may include a combination of a PSS, an SSS, a PBCH, etc. For a system to which a beam sweeping technology is applied, an SS/PBCH block may be a minimum unit to which beam sweeping is applied. In the 5G system, N=4 may be satisfied. The base station may transmit up to a maximum of L SS/PBCH blocks, and the L SS/PBCH blocks may be mapped within a half frame (0.5ms). The L SS/PBCH blocks may be periodically repeated at predetermined periods P. The base station may inform a UE of period P via signaling. If there is no separate signaling of period P, the UE may apply a previously agreed default value.

Referring to FIG. 3, FIG. 3 illustrates an example in which beam sweeping is applied in units of SS/PBCH blocks over time. In the example of FIG. 3, UE 1 305 may receive an SS/PBCH block by means of a beam emitted in direction #d0 303 by beamforming applied to SS/PBCH block #0 at time point t1 301. In addition, UE 2 306 receives an SS/PBCH block by means of a beam emitted in direction #d4 304 by beamforming applied to SS/PBCH block #4 at time point t2 302. The UE may acquire, from the base station, an optimal synchronization signal via a beam emitted in the direction where the UE is located. For example, it may be difficult for UE 1 305 to acquire time/frequency synchronization and mandatory system information from the SS/PBCH block through the beam emitted in direction #d4 far away from the location of UE 1.

In addition to the above-described initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/-frequency synchronization with the adjacent cell.

Hereinafter, the initial cell access operation procedure in the 5G wireless communication system will be described in more detail with reference to the drawings.

A synchronization signal is a signal that serves as a reference for a cell search, and may be transmitted by applying of a subcarrier spacing appropriate for a channel environment (e.g., phase noise) for each frequency band. A 5G base station may transmit multiple synchronization signal blocks according to the number of analog beams to be operated. For example, a PSS and an SSS may be mapped and transmitted over 12 RBs, and a PBCH may be mapped and transmitted over 24 RBs. Hereinafter, a description will be given of a structure in which a synchronization signal and a PBCH are transmitted in the 5G communication system.

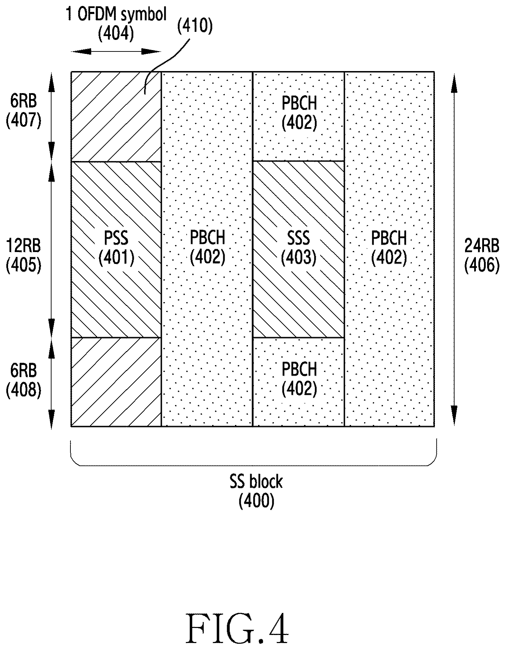

FIG. 4 illustrates a synchronization signal block in a wireless communication system according to various embodiments of the disclosure; According to FIG. 4, a synchronization signal block (SS block) 400 may include a PSS 401, an SSS 403, and a physical broadcast channel (PBCH) 402.

The synchronization signal block 400 may be mapped to four OFDM symbols 404 on the time axis. The PSS 401 and SSS 403 may be transmitted in 12 RBs 405 on the frequency axis, and in the first and third OFDM symbols, respectively, on the time axis. In the 5G system, for example, a total of 1008 different cell IDs may be defined. Depending on a physical layer cell ID (physical cell ID (PCI)) of a cell, the PSS 401 may have 3 different values, and the SSS 403 may have 336 different values. Via detection of the PSS 401 and SSS 403, the UE may obtain one of the (336X3=)1008 cell IDs, based on a combination thereof. This may be expressed by Equation 1 below.

<Equation 1>

$$N_{ID}^{cell} = 3N_{ID}^{(1)} + N_{ID}^{(2)}$$

Here, $N_{ID}^{(1)}$ may be estimated from the SSS 403 and may have a value of 0 to 335. Here, $N_{ID}^{(2)}$ may be estimated from the PSS 401 and may have a value of 0 to 335. The UE may estimate an $N_{ID}^{cell}$ value as the cell ID by means of a combination of $N_{ID}^{(1)}$ and $N_{ID}^{(2)}$.

The PBCH 402 may be transmitted in 24 RBs 406 on the frequency axis, and in the second and fourth OFDM symbols of the SS block on the time axis. Also, the PBCH 402 may be transmitted in resources including 6 RBs 407 and 408 on both sides, except the middle 12 RBs 405. The PBCH 402 may include a PBCH payload and a PBCH demodulation reference signal (PBCH DMRS). Various system information referred to as "MIB" may be transmitted via the PBCH payload. For example, the MIB may include information as in Table 2 below.

[Table 2]

| MIB ::= | SEQUENCE { |
|---|---|
| systemFrameNumber | BIT STRING (SIZE (6)), |
| subCarrierSpacingCommon | ENUMERATED {scs15or60, scs30or120}, |
| ssb-SubcarrierOffset | INTEGER (0..15), |
| dmrs-TypeA-Position | ENUMERATED {pos2, pos3}, |
| pdcch-ConfigSIB1 | PDCCH-ConfigSIB1, |
| cellBarred | ENUMERATED {barred, notBarred}, |
| intraFreqReselection | ENUMERATED {allowed, notAllowed}, |
| spare | BIT STRING (SIZE (1)) |
| } | |

- Synchronization signal block information: An offset of the frequency domain of the synchronization signal block may be indicated via 4-bit ssb-SubcarrierOffset in the MIB. An index of the synchronization signal block including the PBCH may be indirectly acquired via decoding of the PBCH and the PBCH DMRS. In an embodiment, in a frequency band below 6GHz, 3 bits acquired via decoding of the PBCH DMRS may indicate the synchronization signal block index, and in a frequency band of 6GHz or higher, a total of 6 bits, which includes 3 bits acquired via decoding of the PBCH DMRS and 3 bits which are included in the PBCH payload and acquired from PBCH decoding, may indicate the synchronization signal block index including the PBCH.

- PDCCH configuration information: A subcarrier spacing of a common downlink control channel may be indicated via 1 bit (subCarrierSpacingCommon) in the MIB, and time-frequency resource configuration information of a control resource set (CORESET) and a search space may be indicated via 8 bits (pdcch-ConfigSIB 1).

- SFN: In the MIB, 6 bits (systemFrameNumber) may be used to indicate a part of an SFN. 4 bit-least significant bit (LSB) of the SFN may be included in the PBCH payload and indirectly acquired by the UE via PBCH decoding.

- Timing information in a radio frame: Timing information is 1 bit (half frame) which is included in the aforementioned synchronization signal block index and PBCH payload, and acquired via PBCH decoding, and the UE may indirectly identify whether the synchronization signal block has been transmitted in a first or second half frame of a radio frame.

According to an embodiment, the transmission bandwidth (12 RBs 405) for the PSS 401 and the SSS 403 is different from the transmission bandwidth (24 RBs 406) for the PBCH 402, and thus, in the first OFDM symbol in which the PSS 401 is transmitted within the PBCH 402 transmission bandwidth, there exist 6 RBs 407 and 6 RBs 408 on both sides, except the middle 12 RBs in which the PSS 401 is transmitted. The above-mentioned area may be used to transmit other signals or may be empty.

In an embodiment, synchronization signal blocks may be transmitted using the same analog beam. For example, the PSS 401, the SSS 403, and the PBCH 402 maybe all transmitted via the same beam. Since analog beams cannot be applied differently on the frequency axis, the same analog beam may be applied to all frequency-axis RBs within a specific OFDM symbol to which a specific analog beam is applied. For example, 4 OFDM symbols in which the PSS 401, the SSS 403, and the PBCH 402 are transmitted may be all transmitted by means of the same analog beam.

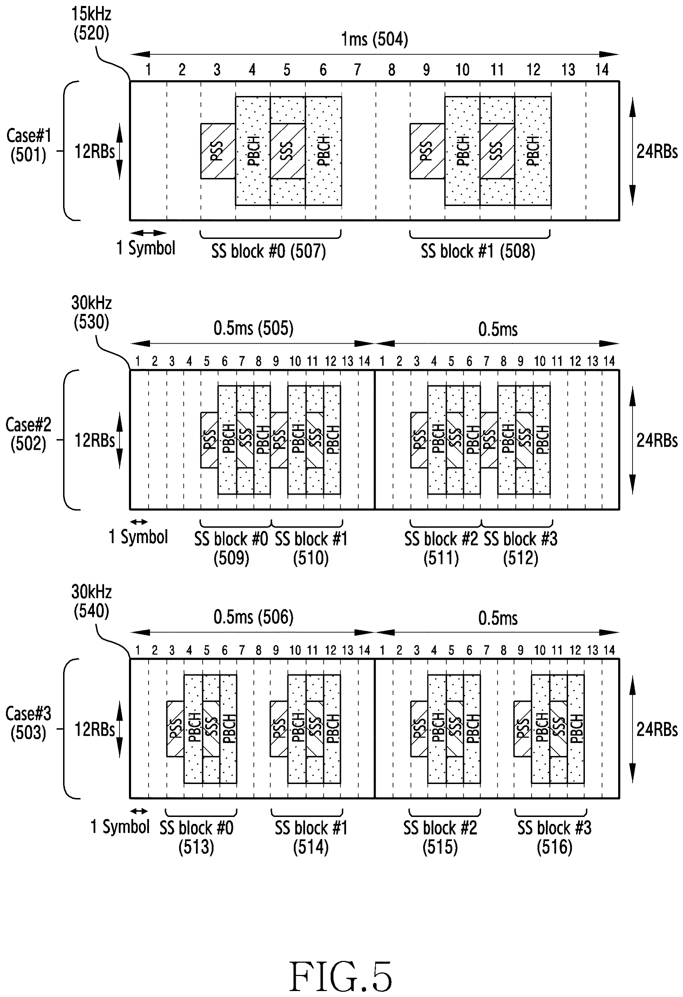

FIG. 5 illustrates various transmission cases of a synchronization signal block in a frequency band below 6GHz considered in a wireless communication system according to an embodiment of the disclosure;
Referring to FIG. 5, in the 5G communication system, a subcarrier spacing (SCS) 520 of 15kHz and a subcarrier spacing (SCS) 530 or 540 of 30kHz may be used for synchronization signal block transmission in a frequency band of 6GHz or below. There may be one transmission case (e.g., case #1 501) for a synchronization signal block in the subcarrier spacing 520 of 15kHz, and there may be two transmission cases (e.g., case #2 502 and case #3 503) for a synchronization signal block in the subcarrier spacing 530 or 540 of 30kHz.

In FIG. 5, in case #1 501 with the subcarrier spacing 520 of 15kHz, a maximum of 2 synchronization signal blocks may be transmitted within a time of 1ms 504 (or corresponding to a length of one slot if one slot includes 14 OFDM symbols).

In an example of FIG. 5, synchronization signal block #0 507 and synchronization signal block #1 508 are illustrated. For example, synchronization signal block #0 507 may be mapped to 4 consecutive symbols starting from the third OFDM symbol, and synchronization signal block #1 508 may be mapped to 4 consecutive symbols starting from the ninth OFDM symbol.

Different analog beams may be applied to synchronization signal block #0 507 and synchronization signal block #1 508. The same beam may be applied to all of the third to sixth OFDM symbols to which synchronization signal block #0 507 is mapped, and the same beam may be applied to all of the ninth to 12th OFDM symbols to which synchronization signal block #1 508 is mapped. With regard to which beams are to be used for the seventh, eighth, 13th, and 14th OFDM symbols to which no synchronization signal block is mapped, analog beams may be freely determined at the discretion of the base station.

In FIG. 5, in case #2 502 with the subcarrier spacing 530 of 30kHz, a maximum of 2 synchronization signal blocks may be transmitted within a time of 0.5ms 505 (or corresponding to a length of one slot if one slot includes 14 OFDM symbols), and accordingly, a maximum of 4 synchronization signal blocks may be transmitted within a time of 1ms (or corresponding to a length of two slots if one slot includes 14 OFDM symbols). In an example of FIG. 5, a case where synchronization signal block #0 509, synchronization signal block #1 510, synchronization signal block #2 511, and synchronization signal block #3 512 are transmitted within a time of 1ms (e.g., two slots) is illustrated. Synchronization signal block #0 509 and synchronization signal block #1 510 may be mapped to symbols starting from the fifth OFDM symbol and the ninth OFDM symbol of the first slot, respectively, and synchronization signal block #2 511 and synchronization signal block #3 512 may be mapped to symbols starting from the third OFDM symbol and the seventh OFDM symbol of the second slot, respectively.

According to an embodiment, different analog beams may be applied to synchronization signal block #0 509, synchronization signal block #1 510, synchronization signal block #2 511, and synchronization signal block #3 512, respectively. The same analog beam may be applied to all of the fifth to eighth OFDM symbols of the first slot in which synchronization signal block #0 509 is transmitted, the ninth to 12th OFDM symbols of the first slot in which synchronization signal block #1 510 is transmitted, the third to sixth symbols of the second slot in which synchronization signal block #2 511 is transmitted, and the seventh to tenth symbols of the second slot in which synchronization signal block #3 512 is transmitted. With regard to which beams are to be used for OFDM symbols to which no synchronization signal block is mapped, analog beams may be freely determined at the discretion of the base station.

In FIG. 5, in case #3 540 with the subcarrier spacing 503 of 30kHz, a maximum of 2 synchronization signal blocks may be transmitted within a time of 0.5ms 506 (or corresponding to a length of one slot if one slot includes 14 OFDM symbols), and accordingly, a maximum of 4 synchronization signal blocks may be transmitted within a time of 1ms (or corresponding to a length of two slots if one slot includes 14 OFDM symbols).

In an example of FIG. 5, transmission of synchronization signal block #0 513, synchronization signal block #1 514, synchronization signal block #2 515, and synchronization signal block #3 516 within a time of 1ms (e.g., two slots) is illustrated. Synchronization signal block #0 513 and synchronization signal block #1 514 may be mapped to symbols starting from the third OFDM symbol and the ninth OFDM symbol of the first slot, respectively, and synchronization signal block #2 515 and synchronization signal block #3 516 may be mapped to symbols starting from the third OFDM symbol and the ninth OFDM symbol of the second slot, respectively.

According to an embodiment, different analog beams may be used for synchronization signal block #0 513, synchronization signal block #1 514, synchronization signal block #2 515, and synchronization signal block #3 516. As described in the above examples, the same analog beam may be used for all 4 OFDM symbols in which the respective synchronization signal blocks are transmitted, and which beams are to be used for OFDM symbols to which no synchronization signal block is mapped, analog beams may be freely determined at the discretion of the base station.

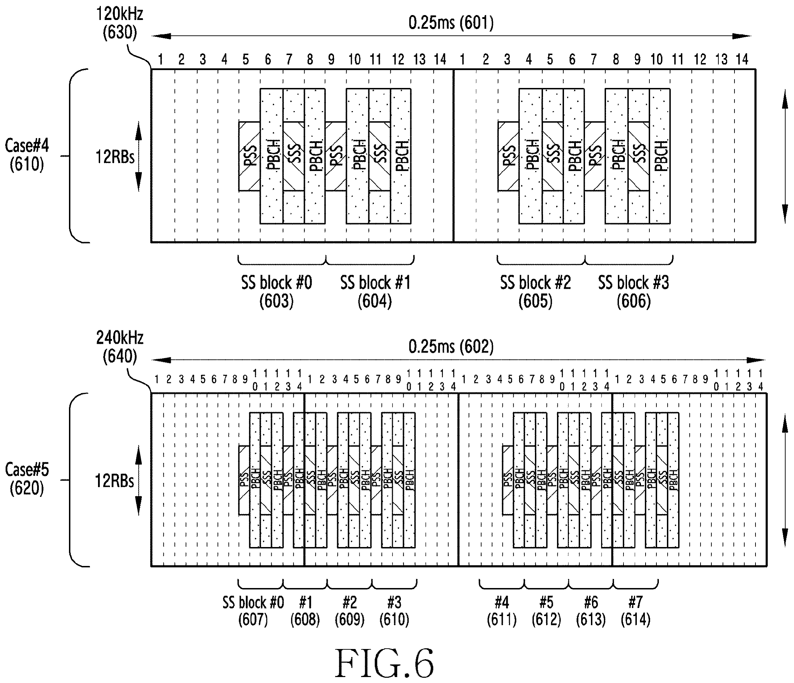

FIG. 6 illustrates transmission cases of a synchronization signal block in a frequency band of 6GHz or above considered in a wireless communication system according to an embodiment of the disclosure.

In the 5G communication system, in a frequency band of 6GHz or above, a subcarrier spacing 630 of 120kHz as in case #4 610 and a subcarrier spacing 640 of 240kHz as in case #5 620 may be used for synchronization signal block transmission.

In case #4 630 with the subcarrier spacing 610 of 120kHz, a maximum of 4 synchronization signal blocks may be transmitted within a time of 0.25ms 601 (or corresponding to a length of two slots if one slot includes 14 OFDM symbols).

In an example of FIG. 6, a case where synchronization signal block #0 603, synchronization signal block #1 604, synchronization signal block #2 605, and synchronization signal block #3 606 are transmitted within a time of 0.25ms (e.g., two slots) is illustrated. Synchronization signal block #0 603 and synchronization signal block #1 604 may be mapped to 4 consecutive symbols starting from the fifth OFDM symbol and to 4 consecutive symbols starting from the ninth OFDM symbol of the first slot, respectively, and synchronization signal block #2 605 and synchronization signal block #3 606 may be mapped to 4 consecutive symbols starting from the third OFDM symbol and to 4 consecutive symbols starting from the seventh OFDM symbol of the second slot, respectively.

As described in the above embodiments, different analog beams may be used for synchronization signal block #0 603, synchronization signal block #1 604, synchronization signal block #2 605, and synchronization signal block #3 606. In addition, the same analog beam may be used for all 4 OFDM symbols in which the respective synchronization signal blocks are transmitted, and which beams are to be used in OFDM symbols to which no synchronization signal block is mapped may be freely determined at the discretion of the base station.

In case #5 640 with the subcarrier spacing 620 of 240kHz, a maximum of 8 synchronization signal blocks may be transmitted within a time of 0.25ms 602 (or corresponding to a length of 4 slots if one slot includes 14 OFDM symbols).

In an example of FIG. 6, a case where synchronization signal block #0 607, synchronization signal block #1 608, synchronization signal block #2 609, synchronization signal block #3 610, synchronization signal block #4 611, synchronization signal block #5 612, synchronization signal block #6 613, and synchronization signal block #7 614 are transmitted within a time of 0.25ms (i.e., 4 slots) is illustrated.

Synchronization signal block #0 607 and synchronization signal block #1 608 may be mapped to 4 consecutive symbols starting from the ninth OFDM symbol and to 4 consecutive symbols starting from the 13th OFDM symbol of the first slot, respectively, synchronization signal block #2 609 and synchronization signal block #3 610 may be mapped to 4 consecutive symbols starting from the third OFDM symbol and to 4 consecutive symbols starting from the seventh OFDM symbol of the second slot, respectively, synchronization signal block #4 611, synchronization signal block#5 612, and synchronization signal block #6 613 may be mapped to 4 consecutive symbols starting from the fifth OFDM symbol, to 4 consecutive symbols starting from the ninth OFDM symbol, and to 4 consecutive symbols starting from the 13th OFDM symbol of the third slot, respectively, and synchronization signal block #7 614 may be mapped to 4 consecutive symbols starting from the third OFDM symbol of the fourth slot.

As described in the above embodiments, different analog beams may be applied to synchronization signal block #0 607, synchronization signal block #1 608, synchronization signal block #2 609, synchronization signal block #3 610, synchronization signal block #4 611, synchronization signal block #5 612, synchronization signal block #6 613, and synchronization signal block #7 614. In addition, the same analog beam may be used for all 4 OFDM symbols in which the respective synchronization signal blocks are transmitted, and which beams are to be used in OFDM symbols to which no synchronization signal block is mapped may be freely determined at the discretion of the base station.

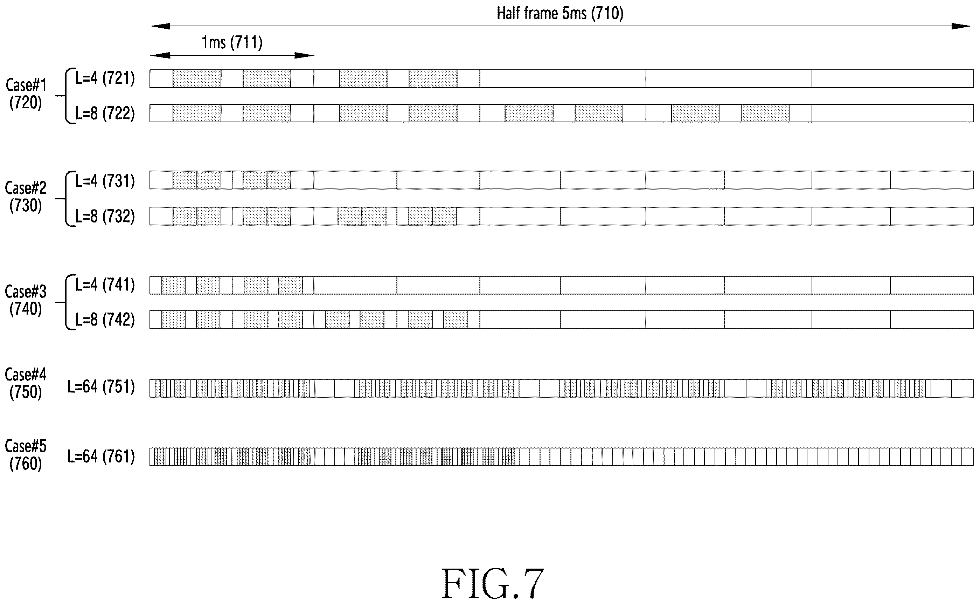

FIG. 7 illustrates transmission cases of a synchronization signal block according to a subcarrier spacing within a time of 5ms in a wireless communication system according to various embodiments of the disclosure.

Referring to FIG. 7, in the 5G communication system, synchronization signal blocks are transmitted periodically, for example, in units of time intervals of 5ms 710 (corresponding to, for example, 5 subframes or a half frame).

According to an embodiment, in a frequency band of 3GHz or below, a maximum of 4 synchronization signal blocks may be transmitted within a time of 5ms 710. In a frequency band of above 3GHz to 6GHz or below, a maximum of 8 synchronization signal blocks may be transmitted. In a frequency band of above 6GHz, a maximum of 64 synchronization signal blocks may be transmitted. As described above, subcarrier spacings of 15kHz and 30kHz may be used at a frequency of 6GHz or below.

Referring to FIG. 7, in case #1 501 including one slot with the subcarrier spacing of 15kHz of FIG. 5, synchronization signal blocks may be mapped to the first slot and the second slot so that a maximum of 4 synchronization signal blocks 721 may be transmitted in a frequency band of 3GHz or below, and synchronization signal blocks may be mapped to the first, second, third, and fourth slots so that a maximum of 8 synchronization signal blocks 722 may be transmitted in a frequency band of above 3GHz to 6 GHz or below. In case #2 502 or case #3 503 including two slots with the subcarrier spacing of 30kHz of FIG. 5, synchronization signal blocks may be mapped to slots starting from the first slot so that a maximum of 4 synchronization signal blocks 731 and 741 may be transmitted in a frequency band of 3GHz or below, and synchronization signal blocks may be mapped to slots starting from the first and third slots so that a maximum of 8 synchronization signal blocks 732 and 742 may be transmitted in a frequency band of above 3GHz to 6GHz or below.

The subcarrier spacings of 120 kHz and 240 kHz may be used at a frequency of above 6GHz. Referring to FIG. 7, in case #4 610 including two slots with the subcarrier spacing of 120kHz of FIG. 6, synchronization signal blocks may be mapped to slots starting from the first, third, fifth, seventh, 11th, 13th, 15th, 17th, 21st, 23rd, 25th, 27th, 31st, 33rd, 35th, and 37th slots so that a maximum of 64 synchronization signal blocks 751 may be transmitted in a frequency band of above 6GHz. In case #5 620 including 4 slots with the subcarrier spacing of 240kHz of FIG. 6, synchronization signal blocks may be mapped to slots starting from the first, fifth, ninth, 13th, 21st, 25th, 29th, and 33rd slots so that a maximum of 64 synchronization signal blocks 761 may be transmitted in a frequency band of above 6GHz.

The UE may decode the PDCCH and PDSCH, based on system information included in the received MIB and then acquire an SIB. The SIB may include at least one of uplink cell bandwidth-related information, a random access parameter, a paging parameter, or an uplink power control-related parameter.

In general, the UE may establish a radio link to a network through a random access procedure, based on synchronization and system information acquired in the cell search process for the corresponding cell. As the random access, a contention-based scheme or a contention-free scheme may be used. If the UE performs cell selection and reselection during the initial cell access operation (for example, in order to move from an RRC_IDLE (radio access control (RRC) idle) state to an RRC_CONNECTED (RRC connected) state), the contention-based random-access scheme may be used. The contention-free random access scheme may be used in order to reconfigure uplink synchronization in the case where downlink data is reached, in the case of handover, or in the case of location measurement. Table 3 below enumerates conditions (events) that trigger a random access procedure in the 5G system.

[Table 3]

| |
|---|
| - Initial access from RRC_IDLE; |
| - RRC Connection Re-establishment procedure; |
| - DL or UL data arrival during RRC_CONNECTED when UL synchronisation status is "non-synchronised"; |
| - UL data arrival during RRC_CONNECTED when there are no PUCCH resources for SR available; |
| - SR failure; |
| - Request by RRC upon synchronous reconfiguration (e.g. handover); |
| - RRC Connection Resume procedure from RRC_INACTIVE; |
| - To establish time alignment for a secondary TAG; |
| - Request for Other SI; |
| - Beam failure recovery; |
| - Consistent UL LBT failure on SpCell. |

Hereinafter, a description will be given of a measurement time configuration method for radio resource management (RRM) based on a synchronization signal block (SS block or SSB) in the 5G wireless communication system.

According to an embodiment, as a configuration for SSB-based intra/inter-frequency measurements and CSI-RS-based intra/inter-frequency measurements, MeasObjectNR of MeasObjectToAddModList may be configured for the UE via higher layer signaling. For example, MeasObjectNR may be configured as in Table 4 below.

[Table 4]

| MeasObjectNR ::= | SEQUENCE { |
| --- | --- |

```
        ssbFrequency                                        ARFCN-ValueNR
OPTIONAL,    -- Cond SSBorAssociatedSSB
        ssbSubcarrierSpacing                                SubcarrierSpacing
OPTIONAL,    -- Cond SSBorAssociatedSSB
        smtc1                                               SSB-MTC
OPTIONAL,    -- Cond SSBorAssociatedSSB
        smtc2                                               SSB-MTC2
OPTIONAL,    -- Cond IntraFreqConnected
        refFreqCSI-RS                                       ARFCN-ValueNR
OPTIONAL,    -- Cond CSI-RS
        referenceSignalConfig           ReferenceSignalConfig,
        absThreshSS-BlocksConsolidation                     ThresholdNR
OPTIONAL,    -- Need R
        absThreshCSI-RS-Consolidation                       ThresholdNR
OPTIONAL,    -- Need R
        nrofSS-BlocksToAverage          INTEGER (2..maxNrofSS-BlocksToAverage)
OPTIONAL,    -- Need R
        nrofCSI-RS-ResourcesToAverage           INTEGER    (2..maxNrofCSI-RS-
ResourcesToAverage)             OPTIONAL,    -- Need R
        quantityConfigIndex             INTEGER (1..maxNrofQuantityConfig),
        offsetMO                        Q-OffsetRangeList,
        cellsToRemoveList                                   PCI-List
OPTIONAL,    -- Need N
        cellsToAddModList                                   CellsToAddModList
OPTIONAL,    -- Need N
        blackCellsToRemoveList                              PCI-RangeIndexList
OPTIONAL,    -- Need N
        blackCellsToAddModList          SEQUENCE (SIZE (1..maxNrofPCI-Ranges))
OF PCI-RangeElement         OPTIONAL,    -- Need N
        whiteCellsToRemoveList                              PCI-RangeIndexList
OPTIONAL,    -- Need N
        whiteCellsToAddModList          SEQUENCE (SIZE (1..maxNrofPCI-Ranges))
OF PCI-RangeElement         OPTIONAL,    -- Need N
        ...,
        [[
        freqBandIndicatorNR                                 FreqBandIndicatorNR
OPTIONAL,    -- Need R
        measCycleSCell                  ENUMERATED {sf160, sf256, sf320, sf512,
sf640, sf1024, sf1280}   OPTIONAL       -- Need R
```

```
        ]],
        [[
        smtc3list-r16                                          SSB-MTC3List-r16
OPTIONAL,    -- Need R
        rmtc-Config-r16                               SetupRelease  {RMTC-Config-r16}
OPTIONAL,    -- Need M
        t312-r16                                        SetupRelease  { T312-r16 }
OPTIONAL    -- Need M
        ]]
    }
```

- ssbFrequency: via which a frequency of a synchronization signal related to MeasObjectNR may be configured.
- ssbSubcarrierSpacing: via which a subcarrier spacing of an SSB may be configured. FR1 may employ 15kHz or 30kHz, and FR2 may employ 120kHz or 240kHz.
- smtc1: which denotes an SS/PBCH block measurement timing configuration, and via which a primary measurement timing configuration may be configured and a timing offset and duration for the SSB may be configured.
- smtc2: via which a secondary measurement timing configuration for SSB related to MeasObjectNR having a PCI listed in pci-List may be configured.

According to various embodiments of the disclosure, the above-described information may also be configured via any other higher layer signaling. For example, SIB2 for intra-frequency, inter-frequency, and inter-RAT reselection or SMTC for NR PSCell change or NR PCell change may be configured for the UE via reconfiguration WithSync. In addition, SMTC for NR SCell addition may be configured for the UE via SCellConfig.

For SSB measurement, the UE may configure the first SS/PBCH block measurement timing configuration (SMTC) according to periodictiyAndOffset (which provides periodicity and offset) via smtc1 configured through higher layer signaling. In an embodiment, the first subframe of each SMTC occasion may start from a subframe of an SpCell and a system frame number (SFN) which satisfy conditions in Table 5 below.

[Table 5]

$$\text{SFN mod } T = (\text{FLOOR } (Offset/10));$$

if the *Periodicity* is larger than *sf5*:

$$\text{subframe} = Offset \bmod 10;$$

else:

$$\text{subframe} = Offset \text{ or } (Offset +5);$$

with $T = \text{CEIL}(Periodicity/10)$.

If smtc2 is configured, for cells indicated by pci-List values of smtc2 in the same MeasObjectNR, the UE may configure an additional SMTC according to the periodicity of configured smtc2 and the offset and duration of smtc1. In addition, the UE may be configured an smtc and measure an SSB via smtc2-LP (with long periodicity) for the same frequency (e.g., frequency for intra frequency cell reselection) or different frequencies (e.g., frequencies for inter frequency cell reselection) and smtc3list for integrated access and backhaul-mobile termination (IAB-MT). In an embodiment, the UE may not consider an SSB transmitted in a subframe other than an SMTC occasion for SSB-based RRM measurement in configured ssbFrequency.

Depending on a serving cell configuration and a physical cell identifier (PCI) configuration, the base station may use various multi-transmission and reception point (TRP) operation schemes. Among them, in a case where two TRPs located at a physical distance have different PCIs, the two TRPs may be operated in two methods.

**[Operation method 1]**

Two TRPs having different PCIs may be operated with two serving cell configurations.

The base station may include, in different serving cell configurations, channels and signals transmitted in different TRPs so as to configure the same using [Operation Method 1]. For example, the respective TRPs may have serving cell configurations independent of each other. Frequency band values FrequencyInfoDLs indicated by DownlinkConfigCommon in the respective serving cell configurations may indicate at least partially overlapping bands. Since multiple TRPs are operated based on multiple ServCellIndexes (e.g., ServCellIndex #1 and ServCellIndex #2), the respective TRPs may use separate PCIs. IFor example, the base station may assign one PCI for each ServCellIndex.

In this case, if multiple SSBs are transmitted at TRP 1 and TRP 2, the SSBs have different PCIs (e.g., PCI #1 and PCI #2), and the base station may select appropriate values of ServCellIndex indicated by a cell parameter in QCL-Info and map PCIs appropriate for the respective TRPs. The base station may designate an SSB transmitted at one of TRP 1 or TRP 2 as the source reference RS of QCL configuration information However, such configurations have a problem in that the degree of freedom of CA configurations is limited or the signaling burden is increased, because one serving cell configuration available for carrier aggregation (CA) of the UE is applied to multiple TRPs.

**[Operation method 2]**

Two TRPs having different PCIs may be operated with one serving cell configuration.

The base station may configure, through one serving cell configuration, channels and signals transmitted in different TRPs using [operation method 2]. Since the UE operates based on one ServCellIndex (e.g., ServCellIndex #1), It may be impossible for the UE to recognize the PCI (e.g., PCI #2) assigned to the second TRP. Compared with [operation method 1] described above, [operation method 2] may have a degree of freedom in connection with CA configurations, but if multiple SSBs are transmitted at TRP 1 and TRP 2, the SSBs have different PCIs (e.g., PCI #1 and PCI #2), and the base station may fail to map the PCI (for example, PCI #2) of the second TRP through the ServCellIndex indicated by a cell parameter in QCL-Info. The base station may be able to designate only an SSB transmitted in TRP 1 as a source reference RS of QCL configuration information, and may be unable to designate an SSB transmitted in TRP 2.

As described above, [operation method 1] may perform multi-TRP operation for two TRPs having different PCIs through an additional serving cell configuration without additional specification support, but [operation method 2] may operate based on additional UE capability reporting and base station configuration information as described below.

**Regarding UE capability reporting for [operation method 2]**

- The UE may report, to the base station through UE capability, that it is possible to configure additional PCIs different from the PCI of the serving cell via higher layer signaling from the base station. The UE capability may include two independent numbers X1 and X2, or X1 and X2 may be reported via independent UE capability.
- X1 may refer to the maximum number of additional PCIs configurable for the UE. The additional PCIs may be different from the PCI of the serving cell, wherein X1 may mean the case where the time domain positions and periodicities of SSBs corresponding to the additional PCIs are the same as the SSB of the serving cell.
- X2 refers to the maximum number of additional PCIs configurable for the UE, wherein the PCIs may be different from the PCI of the serving cel. X2 may mean the case where the time domain positions and periodicities of SSBs corresponding to the additional PCIs are different from the SSBs corresponding to the PCIs reported via X1.
- By the definition, PCIs corresponding to values reported via X1 and X2 may not be configured simultaneously.
- The values reported via X1 and X2 that are reported through the UE capability report may each have an integer value from 0 to 7.
- The values reported via X1 and X2 may be different values in FR1 and FR2.

**Regarding higher layer signaling configuration for [operation method 2]**

- Based on the above-described UE capability report, the UE may be configured higher layer signaling SSB-MTCAdditionalPCI-r17 from the base station. Multipler additional PCIs having different values from at least the serving cell, SSB transmission power corresponding to each of the additional PCIs, and ssb-PostionInBurst corresponding to each of the additional PCIs may be included in the corresponding higher layer signaling, and the maximum number of configurable additional PCIs may be 7.
- The UE may assume that SSBs corresponding to the additional PCIs having different values from the serving cell have the same center frequency, subcarrier spacing, and subframe number offset as the SSB of the serving cell.
- The UE may assume that a reference RS (e.g., SSB or CSI-RS) corresponding to the serving cell PCI is always connected to an activated TCI state. The UE may assume that, if one or multiple additional PCIs having different values from the serving cell are configured, only one PCI among the corresponding PCIs is connected to an activated TCI state.
- If two different corsesetPoolIndexes are configured for the UE, the reference RS corresponding to the serving cell PCI is connected to one or more activated TCI states, and reference RSs corresponding to the additionally configured PCIs having different values from the serving cell are connected to one or more activated TCI states, the UE may expect that the activated TCI state(s) connected to the serving cell PCI is/are connected to one of the two coresetPoolIndexes, and the activated TCI state(s) connected to the additionally configured PCIs having different values from the serving cell is/are connected to the other coresetPoolIndex.

Via the higher layer signaling of the base station and the UE capability reporting for [operation method 2] described above, the additional PCIs having different values from the serving cell PCI may be configured. If the above-described configuration does not exist, SSBs corresponding to the additional PCIs having different values from the serving cell PCI, which cannot be designated as a source reference RS, may be used to be designated as a source reference RS of QCL configuration information. Also, unlike an SSB that may be configured to be used for RRM, mobility, handover, or other usages as for configuration information with regard to an SSB that may be configured in smtc1 and smtc2 (higher layer signaling), the above-described SSBs may be used to serve as a QCL source RS for supporting the operations of multiple TRPs having different PCIs.

Next, a demodulation reference signal (DMRS) which is one of reference signals in the 5G system will be described in detail.

The DMRS may include multiple DMRS ports, and each of the ports may maintain orthogonality by using code division multiplexing (CDM) or frequency division multiplexing (FDM), so as not to interfere with each other. However, the term "DMRS" may be expressed by other terms, depending on a user's intention or the purpose of using the reference signal. The term "DMRS" is merely a specific example provided to easily explain the technical details of the disclosure and to help understanding of the disclosure, and is not intended to limit the scope of the disclosure. In other words, it is apparent to those skilled in the art that the disclosure can be applicable to any reference signal, based on the technical idea of the disclosure.

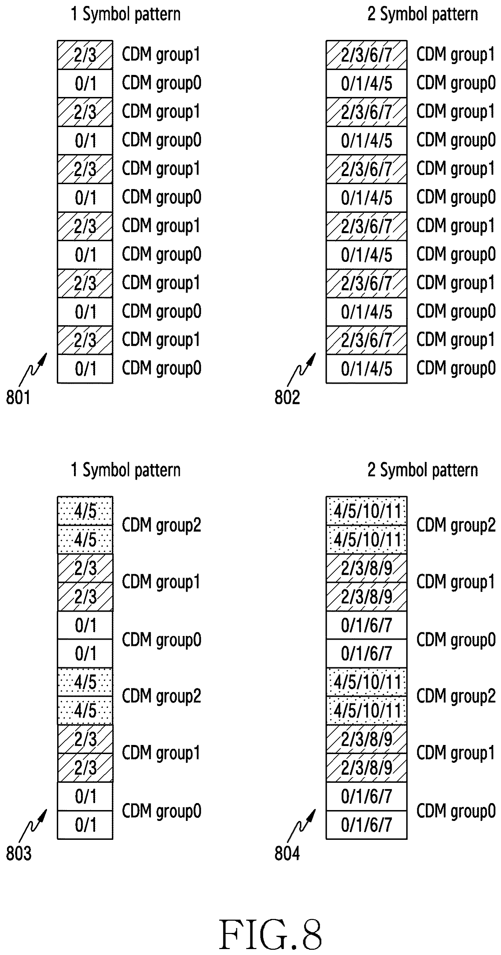

FIG. 8 illustrates DMRS patterns (type 1 and type 2) used for communication between a base station and a UE, according to various embodiments of the disclosure. In a 5G system, two DMRS patterns may be supported. Referring to FIG. 8, two DMRS patterns are illustrated.

Referring to FIG. 8, a pattern 801 and a pattern 802 correspond to DMRS type 1, where pattern 801 indicates a 1-symbol pattern and pattern 802 indicates a 2-symbol pattern. The DMRS type 1 of the pattern 801 and the pattern 802 may be a DMRS pattern having a comb 2 structure, and configured by two CDM groups, and different CDM groups may be FDMed.

According to an embodiment, in the 1-symbol pattern 801, frequency-domain CDM is applied to the same CDM group, so that two DMRS ports may be distinguished, and thus a total of four orthogonal DMRS ports may be configured. The 1-symbol pattern 801 may include a DMRS port ID mapped to each CDM group (e.g., a DMRS port ID for downlink may be represented by the illustrated number plus 1000). According to an embodiment, in the 2-symbol pattern 802, time/frequency-domain CDM is applied to the same CDM group, so that four DMRS ports may be distinguished, and thus a total of eight orthogonal DMRS ports may be configured. The 2-symbol pattern 802 may include a DMRS port ID mapped to each CDM group (e.g., a DMRS port ID for downlink may be represented by the illustrated number plus 1000).

DMRS type 2 illustrated in a pattern 803 and a pattern 804 is a DMRS pattern having a structure in which frequency domain orthogonal cover codes (FD-OCCs) are applied to frequency-domain adjacent subcarriers, and may be configured by three CDM groups, and different CDM groups may be FDMed.

According to an embodiment, in a 1-symbol pattern 803, frequency-domain CDM is applied to the same CDM group, so that two DMRS ports may be distinguished, and thus a total of six orthogonal DMRS ports may be configured. The 1-symbol pattern 803 may include a DMRS port ID mapped to each CDM group (e.g., a DMRS port ID for downlink may be represented by the illustrated number plus 1000). According to an embodiment, in a 2-symbol pattern 804, time/frequency-domain CDM is applied to the same CDM group, so that four DMRS ports may be distinguished, and thus a total of 12 orthogonal DMRS ports may be configured. The 2-symbol pattern 804 may include a DMRS port ID mapped to each CDM group (e.g., a DMRS port ID for downlink may be represented by the illustrated number plus 1000).

As described above, in an NR system, two different DMRS patterns (e.g., the DMRS patterns 801 and 802 or the DMRS patterns 803 and 804) may be configured, and whether each DMRS pattern is a one-symbol pattern 801 or 803 or an adjacent two-symbol pattern 802 or 804 may also be configured. In addition, in the NR system, not only a DMRS port number is scheduled, but also the number of CDM groups scheduled together for PDSCH rate matching may be configured and signaled. In addition, in the case of cyclic prefix based orthogonal frequency division multiplex (CP-OFDM), both of the above-described two DMRS patterns may be supported in DL and UL, and in the case of discrete Fourier transform spread OFDM (DFT-S-OFDM), only DMRS type 1 among the above-described DMRS patterns may be supported in UL.

According to an embodiment, an additional DMRS may be supported to be configurable. A front-loaded DMRS refers to a first DMRS transmitted and received in the frontmost symbol in the time domain among DMRSs, and an additional DMRS refers to a DMRS transmitted and received in a symbol after the front-loaded DMRS in the time domain. In the NR system, the number of additional DMRS may be configured from a minimum of 0 to a maximum of 3. In addition, when an additional DMRS is configured, the same pattern as the front-loaded DMRS may be assumed. In an embodiment, if information on whether the above-described DMRS pattern type is type 1 or type 2 for the front-loaded DMRS, information on whether the DMRS pattern is a one-symbol pattern or an adjacent two-symbol pattern, and information on the number of CDM groups used with DMRS ports are indicated, when an additional DMRS is additionally configured, it may be assumed that the same DMRS information as the front-loaded DMRS is configured for the additional DMRS.

In an embodiment, the above-described downlink DMRS configuration described above may be configured through RRC signaling as shown in <Table 6> below.

【Table 6】

```
DMRS-DownlinkConfig ::=                 SEQUENCE {

dmrs-Type          ENUMERATED {type2}            OPTIONAL,    -- Need S

dmrs-AdditionalPosition   ENUMERATED {pos0, pos1, pos3} OPTIONAL,    -- Need S

maxLength          ENUMERATED {len2}             OPTIONAL,    -- Need S

scramblingID0          INTEGER (0..65535)          OPTIONAL,    -- Need S

scramblingID1          INTEGER (0..65535)          OPTIONAL,    -- Need S

phaseTrackingRS    SetupRelease {PTRS-DownlinkConfig}   OPTIONAL,   -- Need M

        ...

}
```

Here, dmrs-Type may configure a DMRS type, dmrs-AdditionalPosition may configure additional DMRS OFDM symbols, maxLength may configure a 1-symbol DMRS pattern or a 2-symbol DMRS pattern, scramblingID0 and scramblingID1 may configure scrambling IDs, and phaseTrackingRS may configure a phase tracking reference signal (PTRS).

In addition, the above-described uplink DMRS configuration may be configured through RRC signaling as shown in <Table 7> below.

【Table 7】

```
DMRS-UplinkConfig ::=                    SEQUENCE {

    dmrs-Type          ENUMERATED {type2}         OPTIONAL,     -- Need S

    dmrs-AdditionalPosition   ENUMERATED {pos0, pos1, pos3}   OPTIONAL,     -- Need R

    phaseTrackingRS        SetupRelease { PTRS-UplinkConfig }    OPTIONAL,     -- Need M

    maxLength        ENUMERATED {len2}                OPTIONAL,     -- Need S

    transformPrecodingDisabled    SEQUENCE {

        scramblingID0          INTEGER (0..65535)           OPTIONAL,     -- Need S

        scramblingID1          INTEGER (0..65535)           OPTIONAL,     -- Need S

            ...

    }                                    OPTIONAL,     -- Need R

    transformPrecodingEnabled      SEQUENCE {

        nPUSCH-Identity        INTEGER (0..1007)            OPTIONAL,     -- Need S

        sequenceGroupHopping    ENUMERATED {disabled}         OPTIONAL,     -- Need S

        sequenceHopping          ENUMERATED {enabled}        OPTIONAL,     -- Need S

        ...

    }                                    OPTIONAL,     -- Need R

    ...

}
```

Here, dmrs-Type may configure a DMRS type, dmrs-AdditionalPosition may configure additional DMRS OFDM symbols, phaseTrackingRS may configure a PTRS, and maxLength may configure a 1-symbol DMRS pattern or a 2-symbol DMRS pattern. scramblingID0 and scramblingID1 may configure scrambling IDs, nPUSCH-Identity may configure a cell ID for DFT-s-OFDM, sequenceGroupHopping may disable sequence group hopping, and sequenceHopping may enable sequence hopping.

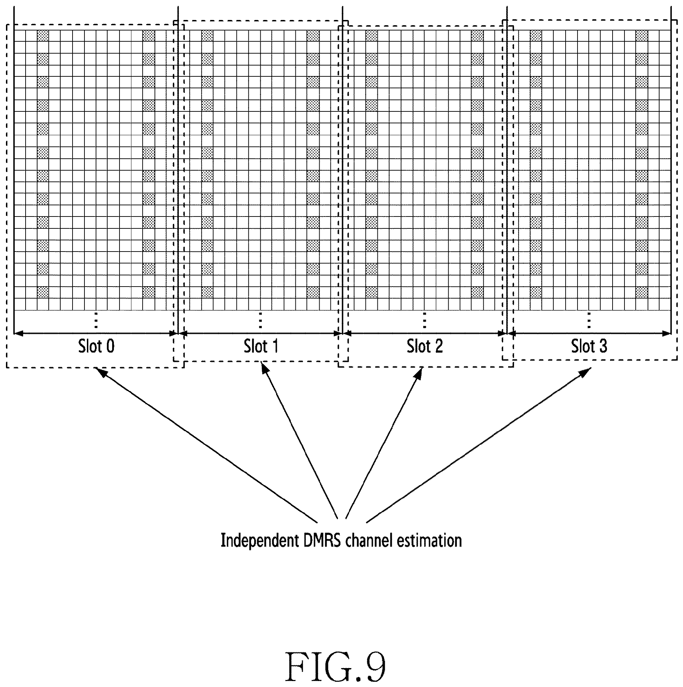

FIG. 9 illustrates an example of channel estimation using a DMRS received through one PUSCH in the time domain, according to various embodiments of the disclosure.

Referring to FIG. 9, in performing channel estimation for data decoding by using a DMRS, in the frequency domain, channel estimation may be performed within a precoding resource block group (PRG), which is a corresponding bundling unit, by using physical resource blocks (PRB) bundling linked to the system bandwidth. In addition, in a time unit, a channel may be estimated on the assumption that only DMRS received through one PUSCH has the same precoding.

Hereinafter, a time domain resource allocation (TDRA) method for a data channel in a 5G communication system is described. A base station may configure, for a UE, a time domain resource allocation information table for a downlink data channel (physical downlink shared channel (PDSCH)) and an uplink data channel (physical uplink data channel (PUSCH)) through higher layer signaling (e.g., RRC signaling).

According to an embodiment, the base station may configure a table including up to maxNrofDL-Allocations=17 entries for the PDSCH, and may configure a table including up to maxNrofUL-Allocations=17 entries for the PUSCH. Time domain resource allocation information may include, for example, at least one of a physical downlink control channel (PDCCH)-to-PDSCH slot timing (a time interval in units of slots between a time point when a PDCCH is received and a time point when a PDSCH scheduled by the received PDCCH is transmitted, denoted as K0), a PDCCH-to-PUSCH slot timing (a time interval in units of slots between a time point when a PDCCH is received and a time point when a PUSCH scheduled by the received PDCCH is transmitted, denoted as K2), information on the position and length of a start symbol in which the PDSCH or PUSCH is scheduled within a slot, or a mapping type of the PDSCH or PUSCH.

In an embodiment, time domain resource allocation information regarding a PDSCH may be configured for the UE through RRC signaling as shown in <Table 8> below.

【Table 8】

| ***PDSCH-TimeDomainResourceAllocationList* information element** |
| --- |
| PDSCH-TimeDomainResourceAllocationList     ::=     SEQUENCE (SIZE(1..maxNrofDL-Allocations)) OF PDSCH-TimeDomainResourceAllocation |
| PDSCH-TimeDomainResourceAllocation ::=    SEQUENCE { |
|      k0                                      INTEGER(0..32) OPTIONAL,     -- Need S |
|      mappingType               ENUMERATED {typeA, typeB}, |
|      startSymbolAndLength      INTEGER (0..127) |
|      repetitionNumber          ENUMERATED {n2, n3, n4, n5, n6, n7, n8, n16} OPTIONAL,     -- Cond Formats1-0and1-1 |
| } |

Here, k0 indicates PDCCH-to-PDSCH timing (e.g., a slot offset between DCI and a scheduled PDSCH) in units of slots, mappingType may indicate a PDSCH mapping type, startSymbolAndLength may indicate the start symbol and length of a PDSCH, and repetitionNumber may indicate the number of PDSCH transmission occasions according to a slot-based repetition scheme.

In an embodiment, time domain resource allocation information regarding a PUSCH may be configured for the UE through RRC signaling as shown in <Table 9> below.

【Table 9】

***PUSCH-TimeDomainResourceAllocation* information element**

PUSCH-TimeDomainResourceAllocationList ::= SEQUENCE (SIZE(1..maxNrofUL-Allocations)) OF PUSCH-TimeDomainResourceAllocation

PUSCH-TimeDomainResourceAllocation ::=    SEQUENCE {

    k2                                                                                INTEGER(0..32) OPTIONAL,    -- Need S

    mappingType                           ENUMERATED {typeA, typeB},

      startSymbolAndLength                INTEGER (0..127)

    }

PUSCH-Allocation-r16 ::=    SEQUENCE {

      mappingType-r16                          ENUMERATED    {typeA,    typeB} OPTIONAL,    -- Cond NotFormat01-02-Or-TypeA

      startSymbolAndLength-r16    INTEGER (0..127)        OPTIONAL,    -- Cond NotFormat01-02-Or-TypeA

      startSymbol-r16                INTEGER (0..13)        OPTIONAL,    -- Cond RepTypeB

      length-r16                        INTEGER (1..14)        OPTIONAL,    -- Cond RepTypeB

      numberOfRepetitions-r16    ENUMERATED {n1, n2, n3, n4, n7, n8, n12, n16} OPTIONAL,    -- Cond Format01-02

      ...

}

Here, k2 indicates PDCCH-to-PDSCH timing (e.g., a slot offset between DCI and a scheduled PDSCH) in units of slots, mappingType may indicate a PUSCH mapping type, startSymbolAndLength or StartSymbol and length may indicate the start symbol and length of a PUSCH, and numberOfRepetitions may indicate the number of repetitions applied to PUSCH transmission.

The base station may indicate, to the UE, at least one of entries in a table for time domain resource allocation information through L1 signaling (e.g., downlink control information (DCI)) (e.g., may be indicated by a "time domain resource allocation" field in DCI). The UE may obtain time domain resource allocation information regarding a PDSCH or PUSCH, based on DCI received from the base station.

Hereinafter, transmission of an uplink data channel (physical uplink shared channel (PUSCH)) in the 5G system is described. PUSCH transmission may be dynamically scheduled by a UL grant in DCI (e.g., referred to as a dynamic grant (DG)-PUSCH) or may be scheduled by configured grant Type 1 or configured grant Type 2 (e.g., referred to as a configured grant (CG)-PUSCH). Dynamic scheduling for PUSCH transmission may be indicated by, for example, DCI format 0_0 or 0_1.

According to an embodiment, PUSCH transmission of configured grant Type 1 may be semi-statically configured through reception of configuredGrantConfig including rrc-ConfiguredUplinkGrant shown in <Table 10> below, through higher layer signaling, without reception of a UL grant in DCI. PUSCH transmission of configured grant Type 2 may be semi-persistently scheduled by a UL grant in DCI after reception of configuredGrantConfig which does not include rrc-ConfiguredUplinkGrant shown in <Table 10> below, through higher layer signaling.

In an embodiment, when PUSCH transmission is scheduled by a configured grant, parameters applied to the PUSCH transmission may be configured through configuredGrantConfig, which is higher layer signaling of <Table 10>, except for specific parameters (e.g., dataScramblingIdentityPUSCH, txConfig, codebookSubset, maxRank, or scaling of UCI-OnPUSCH) provided by pusch-Config of <Table 11>, which is higher layer signaling. For example, when transform-Precoder in configuredGrantConfig, which is higher layer signaling of <Table 10>, is provided to the UE, the UE may apply tp-pi2BPSK in pusch-Config of <Table 11> to PUSCH transmission operated by a configured grant.

【Table 10】

**ConfiguredGrantConfig**

```
ConfiguredGrantConfig ::=                SEQUENCE {
        frequencyHopping                         ENUMERATED  {intraSlot, interSlot}
OPTIONAL,    -- Need S,
        cg-DMRS-Configuration       DMRS-UplinkConfig,
        mcs-Table                                ENUMERATED  {qam256, qam64LowSE}
OPTIONAL,    -- Need S
        mcs-TableTransformPrecoder   ENUMERATED  {qam256, qam64LowSE}
OPTIONAL,    -- Need S
        uci-OnPUSCH                             SetupRelease { CG-UCI-OnPUSCH }
OPTIONAL,    -- Need M
        resourceAllocation                 ENUMERATED { resourceAllocationType0,
resourceAllocationType1, dynamicSwitch },
        rbg-Size                                    ENUMERATED  {config2}
OPTIONAL,    -- Need S
        powerControlLoopToUse       ENUMERATED {n0, n1},
        p0-PUSCH-Alpha                 P0-PUSCH-AlphaSetId,
        transformPrecoder                      ENUMERATED  {enabled,  disabled}
OPTIONAL,    -- Need S
        nrofHARQ-Processes             INTEGER(1..17),
        repK                                   ENUMERATED {n1, n2, n4, n8},
        repK-RV                                 ENUMERATED {s1-0231, s2-0303, s3-0000}
OPTIONAL,    -- Need R
        periodicity                        ENUMERATED {
        sym2, sym7, sym1x14, sym2x14, sym4x14, sym5x14, sym8x14, sym10x14,
sym17x14, sym20x14,
        sym32x14,  sym40x14,  sym64x14,  sym80x14,  sym128x14,  sym170x14,
sym256x14, sym320x14, sym512x14,
        sym640x14, sym1024x14, sym1280x14, sym2560x14, sym5120x14,
        sym6, sym1x12, sym2x12, sym4x12, sym5x12, sym8x12, sym10x12, sym17x12,
sym20x12, sym32x12,
        sym40x12,  sym64x12,  sym80x12,  sym128x12,  sym170x12,  sym256x12,
sym320x12, sym512x12, sym640x12,
        sym1280x12, sym2560x12
        },
        configuredGrantTimer                                 INTEGER  (1..64)
OPTIONAL,    -- Need R
        rrc-ConfiguredUplinkGrant    SEQUENCE {
            timeDomainOffset                    INTEGER (0..5119),
```

```
                  timeDomainAllocation                    INTEGER    (0..16),

                  frequencyDomainAllocation               BIT STRING (SIZE(18)),

                  antennaPort                             INTEGER (0..31),

                  dmrs-SeqInitialization                              INTEGER    (0..1)
OPTIONAL,      -- Need R

                  precodingAndNumberOfLayers              INTEGER (0..63),

                  srs-ResourceIndicator                              INTEGER    (0..16)
OPTIONAL,      -- Need R

                  mcsAndTBS                               INTEGER (0..31),

                  frequencyHoppingOffset                             INTEGER    (1..
maxNrofPhysicalResourceBlocks-1)   OPTIONAL,      -- Need R

                  pathlossReferenceIndex                  INTEGER (0..maxNrofPUSCH-
PathlossReferenceRSs-1),

                       ...

                  }
OPTIONAL,      -- Need R

                  ...

}
```

Next, a PUSCH transmission method is described. A DMRS antenna port for PUSCH transmission may be the same as an antenna port for SRS transmission. PUSCH transmission may follow a codebook-based transmission method and a non-codebook-based transmission method, depending on whether a value of txConfig in pusch-Config of [Table 11], which is higher signaling, is "codebook" or "nonCodebook". As described above, PUSCH transmission may be dynamically scheduled through DCI format 0_0 or 0_1, and may be semi-statically configured by a configured grant.

According to an embodiment, if the UE is instructed to schedule PUSCH transmission through DCI format 0_0, the UE may perform a beam configuration for PUSCH transmission by using pucch-spatialRelationInfoID corresponding to a UE-specific (dedicated) PUCCH resource having a minimum ID (lowest ID) within an activated uplink bandwidth part (BWP) in a serving cell. In an embodiment, PUSCH transmission may be performed based on a single antenna port. The UE may not expect scheduling for PUSCH transmission through DCI format 0_0 within a BWP in which a PUCCH resource including pucch-spatialRelationInfo is not configured. If the UE does not receive a configuration of txConfig in pusch-Config of [Table 11], the UE may not expect to be scheduled through DCI format 0_1.

【Table 11】

*PUSCH-Config*

```
PUSCH-Config ::=                        SEQUENCE {
        dataScramblingIdentityPUSCH                 INTEGER   (0..1023)
OPTIONAL,    -- Need S
        txConfig                        ENUMERATED {codebook, nonCodebook}
OPTIONAL,    -- Need S
        dmrs-UplinkForPUSCH-MappingTypeA        SetupRelease    {   DMRS-
UplinkConfig } OPTIONAL,    -- Need M
        dmrs-UplinkForPUSCH-MappingTypeB        SetupRelease    {   DMRS-
UplinkConfig }   OPTIONAL, -- Need M
        pusch-PowerControl                      PUSCH-PowerControl
OPTIONAL,    -- Need M
        frequencyHopping                ENUMERATED {intraSlot, interSlot}
OPTIONAL,    -- Need S
        frequencyHoppingOffsetLists     SEQUENCE (SIZE (1..4)) OF INTEGER (1..
maxNrofPhysicalResourceBlocks-1)        OPTIONAL,    -- Need M
        resourceAllocation              ENUMERATED { resourceAllocationType0,
resourceAllocationType1, dynamicSwitch},
        pusch-TimeDomainAllocationList          SetupRelease  { PUSCH-
TimeDomainResourceAllocationList }        OPTIONAL,    -- Need M
        pusch-AggregationFactor             ENUMERATED { n2, n4, n8 }
OPTIONAL,    -- Need S
        mcs-Table                       ENUMERATED {qam256, qam64LowSE}
OPTIONAL,    -- Need S
        mcs-TableTransformPrecoder      ENUMERATED {qam256, qam64LowSE}
OPTIONAL,    -- Need S
        transformPrecoder                   ENUMERATED {enabled, disabled}
OPTIONAL,    -- Need S
        codebookSubset      ENUMERATED      {fullyAndPartialAndNonCoherent,
partialAndNonCoherent,nonCoherent}
                        OPTIONAL, -- Cond codebookBased
        maxRank                             INTEGER   (1..4)
OPTIONAL, -- Cond codebookBased
        rbg-Size                            ENUMERATED { config2}
OPTIONAL, -- Need S
        uci-OnPUSCH                     SetupRelease { UCI-OnPUSCH}
OPTIONAL, -- Need M
        tp-pi2BPSK                          ENUMERATED {enabled}
OPTIONAL, -- Need S
```

```
        ...
}
```

Next, codebook-based PUSCH transmission is described. Codebook-based PUSCH transmission may be dynamically scheduled through DCI format 0_0 or 0_1, and may be semi-statically operated by a configured grant. When PUSCH transmission is dynamically scheduled by codebook-based PUSCH DCI format 0_1 or semi-statically configured by a configured grant, the UE may determine a precoder (hereinafter, "precoder") for PUSCH transmission, based on an SRS resource indicator (SRI), a transmission precoding matrix indicator (TPMI), and a transmission rank (e.g., the number of PUSCH transmission layers).

In an embodiment, the SRI may be given through an SRS resource indicator, which is a field in DCI, or may be configured through srs-ResourceIndicator, which is higher signaling. At the time of codebook-based PUSCH transmission, at least one SRS resource may be configured for the UE, and for example, a maximum of two SRS resources may be configured for the UE. When the UE receives the SRI through the DCI, an SRS resource indicated by the corresponding SRI may indicate an SRS resource corresponding to the SRI among SRS resources transmitted before a PDCCH including the corresponding SRI. In addition, the TPMI and the transmission rank may be given through precoding information and number of layers, which is a field in the DCI, or may be configured through precodingAndNumberOfLayers, which is higher signaling. The TPMI may be used to indicate a precoder applied to PUSCH transmission.

According to an embodiment, a precoder to be used for PUSCH transmission may be selected from an uplink codebook having the same number of antenna ports as an nrofSRS-Ports value in SRS-Config, which is higher signaling. In codebook-based PUSCH transmission, the UE may determine a codebook subset, based on the TPMI and codebookSubset in pusch-Config, which is higher signaling. In an embodiment, codebookSubset in pusch-Config, which is higher signaling, may be configured as one of "fullyAndPartialAndNonCoherent", "partialAndNonCoherent", or "nonCoherent", based on UE capability reported by the UE to the base station.

According to an embodiment, if the UE has reported "partialAndNonCoherent" as UE capability, the UE may not expect that a value of codebookSubset, which is higher signaling, is configured to be "fullyAndPartialAndNonCoherent". In addition, if the UE has reported "nonCoherent" as UE capability, the UE may not expect that a value of codebookSubset, which is higher signaling, is configured to be "fullyAndPartialAndNonCoherent" or "partialAndNonCoherent". According to an embodiment, when nrofSRS-Ports in SRS-ResourceSet, which is higher signaling, indicates two SRS antenna ports, the UE may not expect that a value of codebookSubset, which is higher signaling, is configured to be "partialAndNonCoherent".

According to an embodiment, the UE may receive a configuration of one SRS resource set in which a value of usage in the SRS-ResourceSet, which is higher signaling, is configured to be "codebook", and one SRS resource in the corresponding SRS resource set may be indicated through the SRI. If multiple SRS resources are configured in the SRS resource set in which a value of usage in the SRS-ResourceSet, which is higher signaling, is configured to be "codebook", the UE may expect that a value of nrofSRS-Ports in SRS-Resource, which is higher signaling, is configured to be the same value for all SRS resources.

According to an embodiment, the UE may transmit, to the base station, one or multiple SRS resources included in an SRS resource set in which a value of usage is configured to be "codebook" according to higher signaling. The base station may select one of the SRS resources transmitted by the UE, and may indicate the UE to perform PUSCH transmission by using transmission beam information of the corresponding SRS resource. In an embodiment, in codebook-based PUSCH transmission, the SRI may be used as information for selecting an index of one SRS resource and may be included in the DCI. Additionally, the base station may include, in the DCI, information indicating a rank and a TPMI to be used by the UE for PUSCH transmission, and transmit the DCI. The UE may apply a precoder indicated by a TPMI and a rank indicated based on a transmission beam of the corresponding SRS resource by using the SRS resource indicated by the SRI, so as to perform PUSCH transmission.

Next, non-codebook-based PUSCH transmission is described. Non-codebook-based PUSCH transmission may be dynamically scheduled through DCI format 0_0 or 0_1, or may be semi-statically operated by a configured grant. When at least one SRS resource is configured in an SRS resource set in which a value of usage in the SRS-ResourceSet, which is higher signaling, is configured to be "nonCodebook", the UE may receive scheduling of non-codebook-based PUSCH transmission through DCI format 0_1.

According to an embodiment, with respect to the SRS resource set in which a value of usage in the SRS-ResourceSet, which is higher signaling, is configured to be "nonCodebook", the UE may receive a configuration of a non-zero power (NZP) CSI-RS resource associated with one SRS resource set. The UE may perform calculation for a precoder for SRS transmission through measurement of the NZP CSI-RS resource configured in association with the SRS resource set. If the difference between the last received symbol of an aperiodic NZP CSI-RS resource associated with the SRS resource set and the first symbol of aperiodic SRS transmission in the UE is less than a specific symbol (e.g., 42 symbols), the UE may not expect that information on the precoder for SRS transmission is updated.

According to an embodiment, when a value of resourceType in the SRS-ResourceSet, which is higher signaling, is configured to be "aperiodic", an NZP CSI-RS associated with the SRS-ResourceSet may be indicated by SRS request, which is a field in DCI format 0_1 or 1_1. In an embodiment, in a case where the NZP CSI-RS resource associated with the SRS-ResourceSet is an aperiodic NZP CSI resource, and a value of SRS request which is a field in DCI format 0_1 or 1_1 is not "00", the case may indicate that the NZP CSI-RS associated with the SRS-ResourceSet exists. The DCI may not indicate cross carrier or cross BWP scheduling. When the value of SRS request indicates existence of an NZP CSI-RS, the NZP CSI-RS may be positioned in a slot in which a PDCCH including the SRS request field is transmitted. TCI states configured for a scheduled subcarrier may not be configured as QCL-TypeD.

According to an embodiment, if a periodic or semi-persistent SRS resource set is configured, the NZP CSI-RS associated with the SRS resource set may be indicated through associatedCSI-RS in the SRS-ResourceSet, which is higher signaling. With respect to non-codebook-based transmission, the UE may not expect that spatialRelationInfo, which is higher signaling for an SRS resource, and associatedCSI-RS in SRS-ResourceSet, which is higher signaling, are configured together.

According to an embodiment, when multiple SRS resources are configured for the UE, the UE may determine a transmission rank and a precoder to be applied to PUSCH transmission, based on an SRI indicated by the base station. In an embodiment, the SRI may be indicated through an SRS resource indicator, which is a field in DCI, or may be configured through srs-ResourceIndicator, which is higher signaling. As in the above-described codebook-based PUSCH transmission, when the UE is provided with an SRI through DCI, an SRS resource indicated by the corresponding SRI may indicate an SRS resource corresponding to the SRI among SRS resources transmitted before a PDCCH including the corresponding SRI. The UE may use one or multiple SRS resources for SRS transmission. The maximum number of SRS resources capable of simultaneous transmission in the same symbol within one SRS resource set may be determined by UE capability reported by the UE to the base station. SRS resources simultaneously transmitted by the UE may occupy the same RB. The UE may configure one SRS port for each SRS resource. Only one SRS resource set in which a value of usage in the SRS-ResourceSet, which is higher signaling, is configured to be "nonCodebook" may be configured, and up to four SRS resources for non-codebook-based PUSCH transmission may be configured.

According to an embodiment, the base station may transmit one NZP CSI-RS associated with the SRS resource set to the UE. When the corresponding NZP CSI-RS is received, the UE may calculate a precoder to be used when transmitting one or multiple SRS resources within the corresponding SRS resource set, based on a result of measurement. The UE may apply the calculated precoder when transmitting one or multiple SRS resources in the SRS resource set in which usage is configured to be "nonCodebook" to the base station. The base station may select one or multiple SRS resources among the received one or multiple SRS resources. In non-codebook based PUSCH transmission, the SRI may indicate an index capable of expressing one or a combination of multiple SRS resources, and the SRI may be included in the DCI. The number of SRS resources indicated by the SRI transmitted by the base station may be the number of transmission layers of a PUSCH, and the UE may transmit the PUSCH by applying a precoder applied to SRS resource transmission to each layer.

Hereinafter, a single TB transmission method through repeated transmission of an uplink data channel (PUSCH) and multiple slots in a 5G system is described. The 5G system may support two types of repeated transmission methods for an uplink data channel (e.g., PUSCH repeated transmission type A and PUSCH repeated transmission type B), and a transport block (TB) processing over multi-slot PUSCH (TBoMS), which transmits a single TB through multiple PUSCHs over multiple slots. In addition, the UE may receive a configuration of either PUSCH repeated transmission type A or B through higher layer signaling. In addition, the UE may receive a configuration of "numberOfSlotsTBoMS" through a resource allocation table and transmit TBoMS.

PUSCH repeated transmission type A

- As described above, in one slot, the start symbol and length of an uplink data channel may be determined by a time domain resource allocation method. The base station may transmit the number of repeated transmissions to the UE through higher layer signaling (e.g., RRC signaling) or L1 signaling (e.g., DCI). The number of slots N configured as numberOfSlotsTBoMS for determining a TBS may be 1.
- The UE may repeatedly transmit, in consecutive slots, an uplink data channel having the same start symbol and length as those of the configured uplink data channel, based on the number of repeated transmissions received from the base station. In an embodiment, when at least one symbol among symbols in a slot configured for downlink by the base station for the UE or in a slot for repeated transmission of an uplink data channel configured for the UE is configured for downlink, the UE may omit uplink data channel transmission in the corresponding slot. For example, the UE may not transmit the uplink data channel within the number of repeated transmissions of the uplink data channel.

On the other hand, a UE supporting Rel-17 uplink data repeated transmission may determine a slot, in which uplink data repeated transmission is possible, as an available slot. The UE may count the number of transmissions at the time of uplink data channel repeated transmission in a slot determined as an available slot. When the uplink data channel repeated transmission in the slot determined as an available slot is omitted, the UE may perform repeated transmission through a slot that is available for transmission after postponing. Using <Table 12> below, a redundancy version may be applied according to a redundancy version pattern configured for each nth PUSCH transmission occasion.

**PUSCH repeated transmission type B**

- As described above, in one slot, the start symbol and length of an uplink data channel may be determined by a time domain resource allocation method. The base station may transmit the number of repeated transmissions, numberofpetitions, through higher signaling (e.g., RRC signaling) or L1 signaling (e.g., DCI) to the UE. In an embodiment, the number of slots N configured as numberOfSlotsTBoMS for determining a TBS may be 1.
- First, based on the start symbol and length of the configured uplink data channel, nominal repetition of the uplink data channel may be determined as follows. Here, the nominal repetition may refer to a resource of a symbol configured by the base station for PUSCH repeated transmission, and the UE may determine a resource available for uplink in the configured nominal repetition. In this case, a slot in which a nth nominal repetition starts may be given by

$$K_S + \left\lceil \frac{S + n \cdot L}{N_{symb}^{slot}} \right\rceil$$ , and a symbol in which the nominal repetition starts in the start slot may be given by

$$\mathrm{mod}\left(S + n \cdot L, N_{symb}^{slot}\right)$$ . A slot in which the nth nominal repetition ends may be given by

$$K_S + \left\lceil \frac{S + (n+1) \cdot L - 1}{N_{symb}^{slot}} \right\rceil$$ , and a symbol in which the nominal repetition ends in the last slot may be given by

$$\mathrm{mod}\left(S + (n+1) \cdot L - 1, N_{symb}^{slot}\right)$$ . Here, n=0, ... , numberofimpetitions-1, S may indicate the start symbol of the configured uplink data channel, and L may indicate the symbol length of the configured uplink data channel. $K_s$ may indicate a slot in which PUSCH transmission starts, and $N_{symb}^{slot}$ may indicate the number of symbols per slot.

- The UE may determine an invalid symbol for PUSCH repeated transmission type B. A symbol configured for downlink by tdd-UL-DL-ConfigurationCommon or tdd-UL-DL-ConfigurationDedicated may be determined as an invalid symbol for PUSCH repeated transmission type B. Additionally, an invalid symbol may be configured based on a higher layer parameter (e.g., InvalidSymbolPattern). For example, the invalid symbol may be configured by providing a symbol level bitmap over one slot or two slots by the higher layer parameter (e.g., InvalidSymbolPattern). In an embodiment, a symbol marked with "1" in the bitmap may indicate an invalid symbol. Additionally, a period and pattern of the bitmap may be configured through a higher layer parameter (e.g., periodicityAndPattern). If the higher layer parameter (e.g., InvalidSymbolPattern) is configured and the InvalidSymbolPatternIndicator-ForDCIFormat0_1 or InvalidSymbol-PatternIndicator-ForDCIFormat0_2 parameter indicates "1", the UE may apply an invalid symbol pattern, and if the above-described parameter indicates "0", the UE may not apply the invalid symbol pattern. If the higher layer parameter (e.g., InvalidSymbolPattern) is configured and the InvalidSymbolPatternIndicator-ForDCIFormat0_1 or InvalidSymbolPatternIndicator-ForDCIFormat0_2 parameter is not configured, the UE may apply an invalid symbol pattern.
- After an invalid symbol is determined in each nominal repetition, the UE may consider symbols excluding the determined invalid symbol as a valid symbol. When one or more valid symbols are included in each nominal repetition, the nominal repetition may include one or more actual repetitions. Here, each actual repetition may refer to a symbol actually used for PUSCH repeated transmission among symbols configured by the configured nominal repetition, and may include a consecutive set of valid symbols which may be used for PUSCH repeated transmission type B within one slot. The UE may omit actual repeated transmission when actual repetition having one symbol is configured as valid, except for a case in which the symbol length of the configured uplink data channel is 1 (L=1). Using [Table 12] below, a redundancy version may be applied according to a redundancy version pattern configured for each nth actual repetition.

**TB processing over multiple slots (TBoMS)**

- As described above, in one slot, the start symbol and length of an uplink data channel may be determined by a time domain resource allocation method. The base station may transmit the number of repeated transmissions to the UE through higher layer signaling (e.g., RRC signaling) or L1 signaling (e.g., DCI). In an embodiment, a TBS may be determined using an N value greater than or equal to 1, which represents the number of slots configured as numberOfSlotsTBoMS.

- The UE may transmit, in consecutive slots, an uplink data channel having the same start symbol and length as those of the configured uplink data channel, based on the number of repeated transmissions and the number of slots for determining a TBS, received from the base station. In an embodiment, when at least one symbol among symbols in a slot configured for downlink by the base station for the UE or in a slot for repeated transmission of an uplink data channel configured for the UE is configured for downlink, the UE may omit uplink data channel transmission in the corresponding slot. For example, the uplink data channel transmission may be included in the number of uplink data channel repeated transmissions, but the UE may not transmit the uplink data channel.

On the other hand, a UE supporting Rel-17 uplink data repeated transmission may determine a slot, in which uplink data repeated transmission is possible, as an available slot. The UE may count the number of transmissions at the time of uplink data channel repeated transmission in a slot determined as an available slot. When the uplink data channel repeated transmission in the slot determined as an available slot is omitted, the UE may perform repeated transmission through a slot that is available for transmission after postponing. In an embodiment, using <Table 12> below, a redundancy version may be applied according to a redundancy version pattern configured for each nth PUSCH transmission occasion.

[Table 12]

| $rv_{id}$ indicated by the DCI scheduling the PUSCH | $rv_{id}$ to be applied to $n^{th}$ transmission occasion (repetition Type A) or TB processing over multiple slots) or $n^{th}$ actual repetition (repetition Type B) | | | |
|---|---|---|---|---|
| | $((n-(n \bmod N))/N) \bmod 4 = 0$ | $((n-(n \bmod N))/N) \bmod 4 = 0$ | $((n-(n \bmod N))/N) \bmod 4 = 0$ | $((n-(n \bmod N))/N) \bmod 4 = 0$ |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Hereinafter, a method for determining an uplink available slot for single or multiple PUSCH transmissions in a 5G system is described.

In an embodiment, when the UE is configured such that AvailableSlotCounting is enabled, the UE may determine an available slot, based on tdd-UL-DL-ConfigurationCommon, tdd-UL-DL-ConfigurationDedicated, ssb-PositionsIn-Burst, and a time domain resource allocation (TDRA) information field value, for Type A PUSCH repeated transmission and TBoMS PUSCH transmission. For example, when at least one symbol configured by TDRA for a PUSCH in a slot for PUSCH transmission overlaps with at least one symbol for purposes other than uplink transmission, the corresponding slot may be determined as an unavailable slot.

Hereinafter, a method for reducing SSB density through dynamic signaling to save base station energy in a 5G system is described.

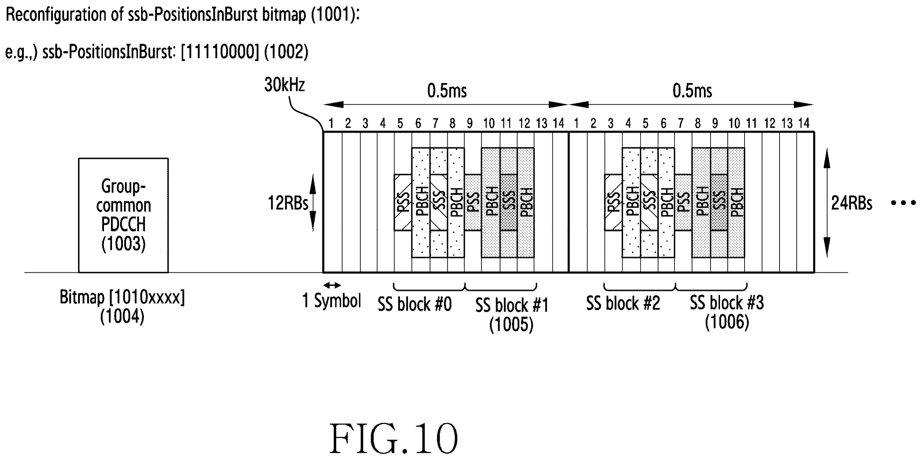

FIG. 10 illustrates a method for reconfiguring SSB transmission through dynamic signaling, according to various embodiments of the disclosure.

Referring to FIG. 10, a UE may receive a configuration of ssb-PositionsInBurst = '11110000' (1002) from a base station through higher layer signaling (e.g., SIB1 or ServingCellConfigCommon). Up to two synchronization signal blocks at a subcarrier spacing of 30 kHz may be transmitted within 0.5 ms (or which corresponds to the length of 1 slot in a case where 1 slot includes 14 OFDM symbols), and accordingly, the UE may receive four synchronization signal blocks (SSBs) within 1 ms (or which corresponds to the length of 2 slots in a case where 1 slot includes 14 OFDM symbols).

According to an embodiment, the base station may reduce the density (hereinafter, "density") of SSB transmission to save energy. Accordingly, the base station may reconfigure SSB transmission configuration information by broadcasting bitmap '1010xxxx' 1004 through Group/Cell common DCI 1003 having network energy saving-radio network temporary identifier (nwes-RNTI) (or es-RNTI). In this case, transmission of SS block #1 1005 and SS block #3 1006 may be canceled based on the bitmap 1004 configured through the Group/Cell common DCI. FIG. 10 illustrates a method 1001 for reconfiguring SSB transmission through bitmap-based group/Cell common DCI.

According to an embodiment, the base station may also reconfigure ssb-periodicity configured through higher layer signaling, based on Group/Cell common DCI. In addition, the base station may additionally configure timer (hereinafter, "timer") information for indicating an application time point of the Group/Cell common DCI. During the configured timer, the base station may transmit an SSB, based on SSB transmission information reconfigured by the Group/Cell common DCI. Thereafter, when the timer expires, the base station may operate based on the SSB transmission information configured by the existing upper layer signaling. For example, the configuration may be changed from a normal mode to an energy saving mode through the timer, and the base station may reconfigure SSB configuration information accordingly. According to another embodiment, the base station may configure, for the UE, an application time point and duration of the reconfigured SSB configuration information through the Group/Cell common DCI by using offset and duration information. In this case, the UE may not monitor the SSB for a duration starting from a time point obtained by applying an offset to a time point when the Group/Cell common DCI is received.

Hereinafter, a BWP or BW adaptation method through dynamic signaling for base station energy saving in a 5G system is described.

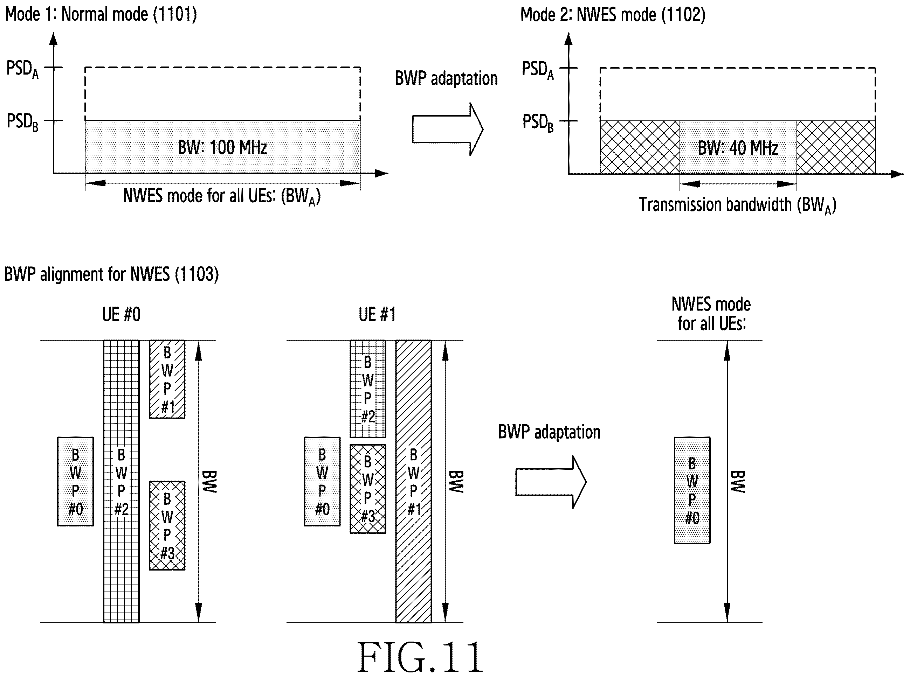

FIG. 11 illustrates a method for reconfiguring a BWP and a BW through dynamic signaling, according to various embodiments of the disclosure.

Referring to FIG. 11, a UE may operate based on a BWP or a BW activated through higher layer signaling or L1 signaling from a base station (1101). For example, the UE may operate through a full BW of 100 MHz as fixed power spectral density ($PSD_B$). In this case, the base station may have the same power ($PSD_B$) for energy saving, and adjust the BW and the BWP to activate a narrower BW of 40 MHz for the UE (1102). In this case, the operation of adjusting the BW or the BWP for energy saving of the base station may include configuring BWP and BW configurations, which are UE-specifically configured, to identically match through Group common DCI and Cell specific DCI (1103). For example, UE #0 and UE #1 may have different BWP configurations and positions. In this case, in order to save energy by reducing the BW used by the base station, the BW and BWP of all UEs may be identically configured as one. In this case, an energy-saving operation according to various embodiments of the disclosure may include configuring one or more BWPs or BWs, and this may be used to configure a BWP for each UE Group.

Hereinafter, a DRX alignment (hereinafter, "alignment") method through dynamic signaling for base station energy saving in a 5G system is described.

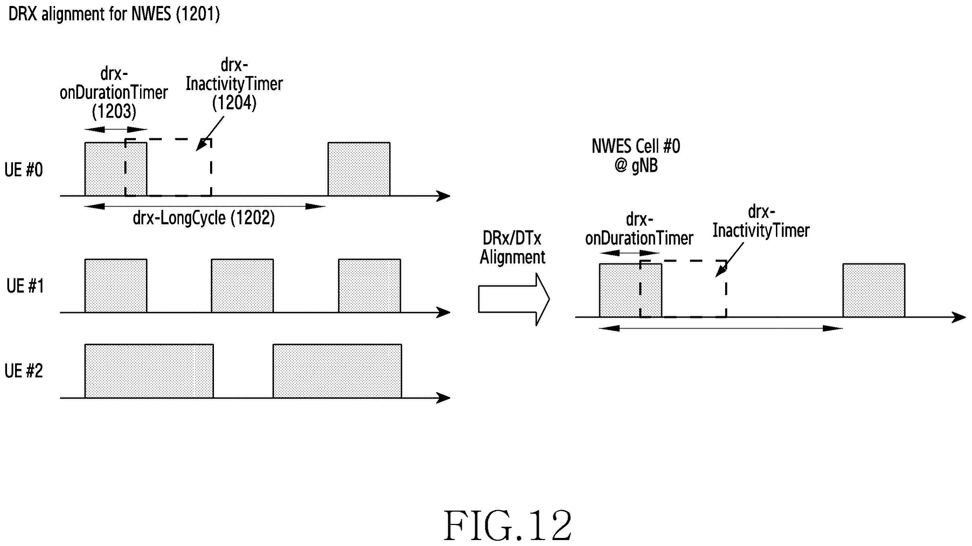

FIG. 12 illustrates a method for reconfiguring DRX through dynamic signaling, according to various embodiments of the disclosure.

Referring to FIG. 12, a base station may configure DRX UE-specifically through higher layer signaling. For example, each UE may receive a configuration of a different drx-LongCycle, drx-ShortCycle, drx-onDurationTimer, or drx-InactivityTimer for each UE. Thereafter, the base station may UE group-specifically or cell-specifically configure a UE-specific DRX configuration through L1 signaling for energy saving (1201). Accordingly, the UE may obtain an effect of saving power through DRX, and the base station may obtain the same effect for energy saving.

Hereinafter, a method for dynamically turning on/off an antenna (e.g., Tx antenna ports (TxRUs)) of a base station for base station energy saving in a 5G system is described.

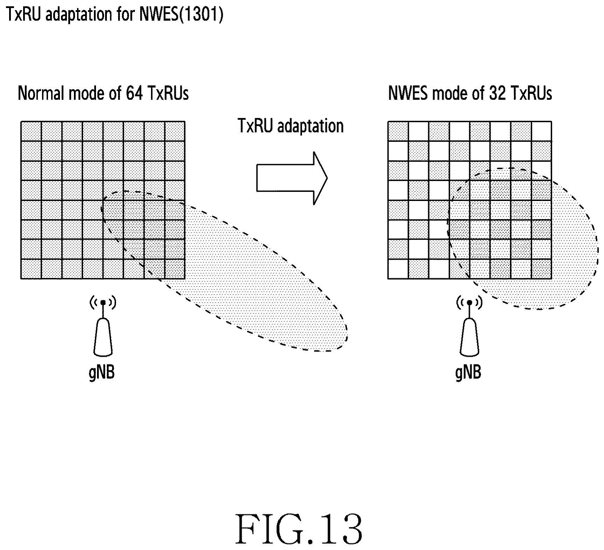

FIG. 13 illustrates a method for antenna adaptation of a base station for energy saving, according to various embodiments of the disclosure.

Referring to FIG. 13, a base station may adjust an antenna (e.g., Tx antenna port per RU) for energy saving. As a power amplifier (PA) of the base station occupies most of energy consumption of the base station, the base station may turn off a transmission antenna (hereinafter, "Tx antenna") to save energy (1301). In this case, in order to determine whether the Tx antenna can be turned off, the base station may adjust the number of activated Tx antennas for each UE group or each UE in consideration of a reference signal received power (RSRP), a channel quality indication (CQI), or a reference signal received quality (RSRQ) of the UE, and may transmit a Tx signal, based on the adjustment. According to an embodiment, the base station may configure, for the UE, beam information and reference signal information according to antenna on/off through DCI signaling. In addition, the base station may configure, for the UE, a different piece of antenna information for each BWP, and reconfigure antenna information according to a BWP change.

Hereinafter, a discontinuous transmission (DTX) operation for reducing energy consumption of a base station in a 5G system is described.

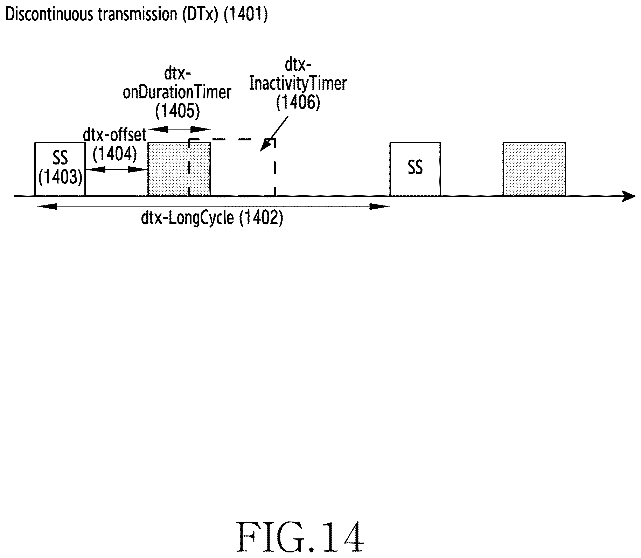

FIG. 14 illustrates a DTX method for energy saving of a base station, according to various embodiments of the disclosure.

Referring to FIG. 14, a base station may configure discontinuous transmission (DTx) for energy saving through higher layer signaling (e.g., a new system information block (SIB) for DTx or RRC signaling) or L1 signaling (DCI). In this case, for a DTx operation, the base station may configure at least one of a PDCCH for scheduling a DL SCH, a dtx-onDurationTimer 1405 for transmitting a reference signal for measurement such as RRM measurement, beam management, and pathloss, or a dtx-InactivityTimer 1406 for receiving a PDSCH after receiving a PDCCH for scheduling a DL SCH. In addition, the base station may configure at least one of synchronization signal (SS) 1403 configuration information for synchronization prior to dtx-onDurationTimer, a dtx-offset 1404 for configuring an offset between the SS and the dtx-onDurationTimer, or a dtx-(Long)Cycle 1402 for periodic DTx operation based on the configuration information. In this case, the dtx-cycle may include multiple cycles, including a long cycle and a short cycle.

According to an embodiment, during a DTx operation, the base station may consider a transmitter to be in an off (or inactive) state, and thus may not transmit a DL CCH, SCH, and DL RS. For example, during the DTx operation, the base station may transmit a downlink signal (e.g., a PDCCH, a PDSCH, an RS, etc.) only within the SS, dtx-onDurationTimer, and dtx-InactivityTimer. In this case, the number of SS bursts or SS-gapbetweenBurst may be additionally configured as additional information of the configured SS.

Hereinafter, a method for activating a base station based on a gNB wake-up signal (WUS) during an inactive mode of the base station to reduce energy consumption of the base station in a 5G system is described.

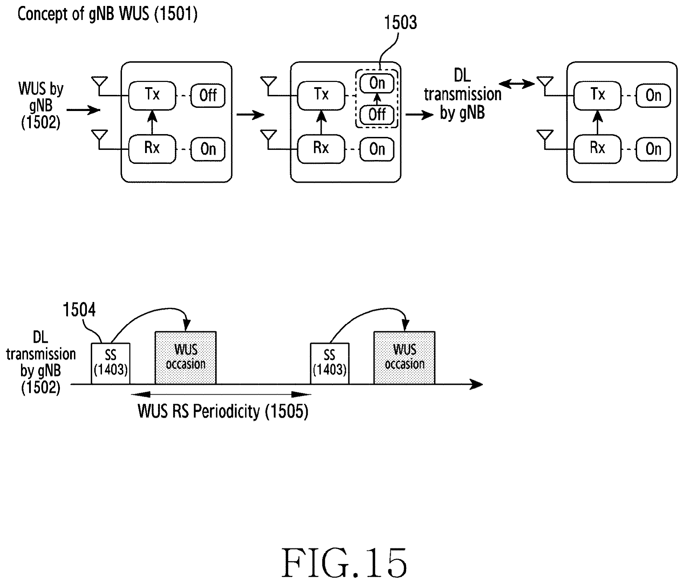

FIG. 15 illustrates an operation of a base station according to a wake-up signal, according to various embodiments of the disclosure.

Referring to FIG. 15, a base station may maintain a transmitter in an Off (or inactive) state during an inactive state (or sleep mode) of the base station in order to save energy. According to an embodiment, thereafter, the base station may receive, from a UE, a gNB wake-up signal (WUS) 1502 for activating the sleep mode of the base station. Thereafter, when the base station receives the WUS from the UE through a receiver (Rx), the base station may change a transmitter (Tx) to an on (or active) state (1503). Thereafter, the base station may perform downlink transmission to the UE. In this case, the base station may perform synchronization after turning on the Tx, and transmit control and data signals. In addition, various uplink signals (e.g., physical random access channel (PRACH), scheduling request physical uplink control channel (SR PUCCH), PUCCH including an acknowledgment (Ack), etc.) may be included in the gNB WUS. Through the above-described methods, the base station may save energy, while the UE may reduce latency.

According to various embodiments, in this case, the base station may configure, for the UE, a WUS occasion (hereinafter, "occasion") for receiving a gNB WUS, and a Sync RS for synchronization before the UE transmits the gNB WUS. In this case, the Sync RS may include an SSB, a tracking reference signal (TRS), a Light SSB (e.g., PSS+SSS), consecutive SSBs, or a new RS (e.g., continuous PSS + SSS). The WUS may include a PRACH, a PUCCH with an SR, or a sequence-based signal.

According to an embodiment, a Sync RS 1504 for activating an inactive mode for energy saving of the base station by the UE and a WUS occasion for receiving a WUS may be repeatedly transmitted based on a WUS-RS periodicity 1505. Referring to FIG. 15, as an example, a 1-to-1 mapping between the Sync and the WUS occasion is described, but the disclosure is not limited thereto and may include an N-to-1, 1-to-N, or N-to-M mapping according to various embodiments.

Through the above-described methods, the energy consumption of the base station may be reduced. In addition, the above-described methods may be configured simultaneously through one or more combinations thereof.

According to embodiments of the disclosure, in order to reduce the energy consumption of the base station, a new pattern of a paging monitoring resource (hereinafter, "paging monitoring resource") of the UE (e.g., a paging hyperframe (hereinafter, "paging hyperframe"), a paging time window (hereinafter, "paging time window"), a paging frame (hereinafter, "paging frame"), and a paging occasion (hereinafter, "paging occasion")) is proposed, and an enhanced DRX (eDRx)/idle-mode DRX (iDRx) alignment method is proposed.

**<First embodiment>**

In a first embodiment of the disclosure, a method for configuring eDRX/iDRX alignment and a paging monitoring resource of a base station for energy saving is described. For energy saving of the base station, a method for configuring eDRX/iDRX alignment and a paging monitoring resource may be configured by one or a combination of the following methods.

**[Method 1]**

[Method 1] describes a method for reconfiguring a cell-specific paging hyperframe for energy saving of a base station.

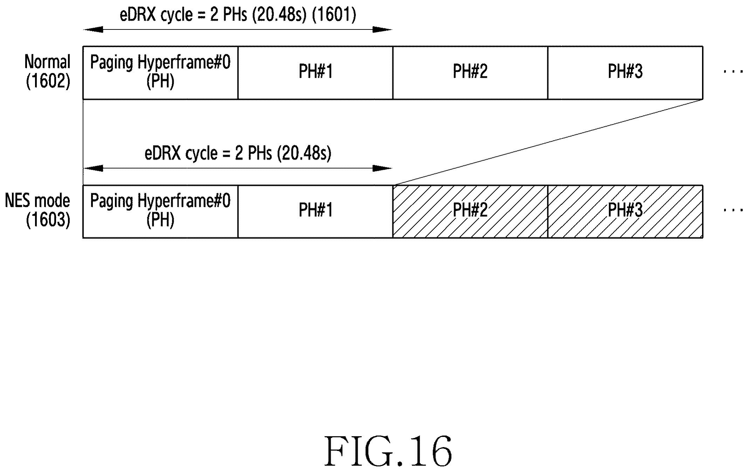

FIG. 16 illustrates a method for newly configuring a paging hyperframe, according to various embodiments of the disclosure.

Referring to FIG. 16, a base station may configure an eDRX to include a cycle corresponding to two paging hyperframes through higher layer signaling in order to reduce energy consumption of a UE (1601).

According to an embodiment, in this case, the base station may perform a paging operation in all paging hyperframes for an RRC idle/inactive UE (1602).

According to an embodiment, in this case, the base station may configure, through higher layer signaling or L1 signaling, a paging hyperframe that all UEs are required to monitor so that paging is received only in a specific paging hyperframe, for energy saving (1603). Configuration information may include at least one of the number of paging hyperframes or a common eDRx cycle for energy saving. Thereafter, the UE may identify an H-SFN of the paging hyperframe, based on its own UE_ID_H, and determine its own paging hyperframe.

According to an embodiment, the following [Equation 1] is an equation for the UE to determine a paging hyperframe during a normal operation (e.g., a non-energy-saving operation).

$$[Equation\ 1]$$
$$\text{H-SFN mod } T_{eDRX\_CN} = (UE\_ID\_H \text{ mod } T_{eDRX\_CN}),$$

where

- UE_ID_H

- 13 most significant bits of the Hashed ID.

- TeDRX_CN: UE-specific eDRX cycle in Hyper-frames, (TeDRX_CN = 2, ..., 1024 Hyper-frames) configured by upper layers.

As shown in [Equation 1], the UE may determine the H-SFN, based on the UE-specific eDRX cycle and the UE_ID_H. According to an embodiment, on the other hand, for energy saving of the base station, the base station may reconfigure a UE-specifically determined paging hyperframe to be cell-specific.

According to an embodiment, through the following [Equation 2], the UE may determine a paging hyperframe, based on at least one of the number of paging hyperframes or the common eDRX cycle configured by the base station through higher layer signaling.

$$[Equation\ 2]$$
If network energy saving mode is configured:

$$\text{H-SFN mod } T_{eDRX\_CN\_NES} = ((UE\_ID\_H \text{ mod } T_{eDRX\_CN}) \text{ mod}$$

subgroupsNumForPaging), where

- UE_ID_H

- 13 most significant bits of the Hashed ID.

- subgroupsNumForPaging: number of activated paging hyperframes during NES mode.

- TeDRX_CN: Cell-specific eDRX cycle in Hyper-frames, (TeDRX_CN = 2, ..., 1024 Hyper-frames) configured by upper layers for network energy saving.

Through [Equation 2], the UE may determine a new H-SFN. According to an embodiment, in this case, whether to configure a network energy saving mode (NES mode) may be determined as a normal mode or an NES mode through higher layer signaling from the base station. According to an embodiment, when a cell-specific eDRX cycle or subgroupsNumForPaging is configured, a mode may be determined as the NES mode.

According to various embodiments of the disclosure, through [method 1], the base station may maintain an inactive state for a longer period of time during an inactive paging hyperframe in the units of paging hyperframes, thereby saving more energy.

**[Method 2]**

[Method 2] describes a method for reconfiguring a cell-specific paging time window for energy saving of a base station.

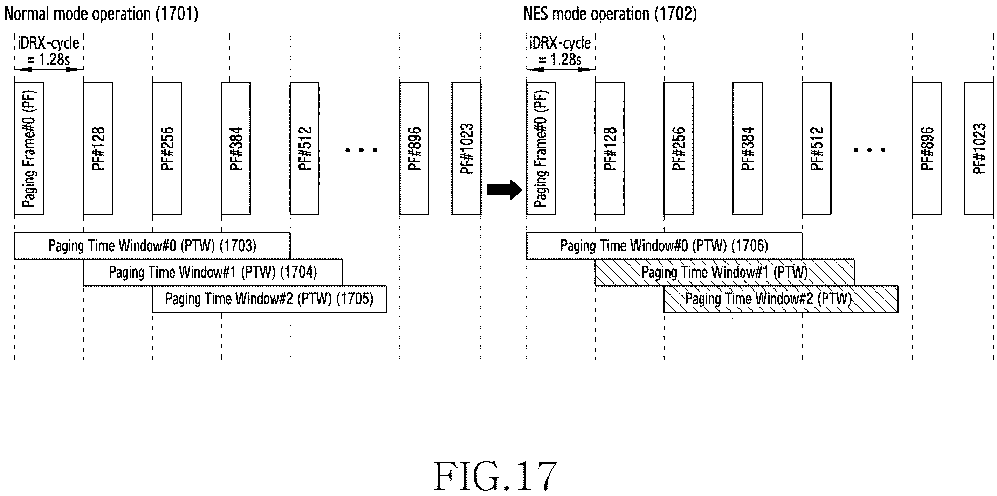

FIG. 17 illustrates a method for newly configuring a paging time window (PTW), according to various embodiments of the disclosure.

Referring to FIG. 17, for paging transmission and energy saving of a UE, a base station may configure, through higher layer signaling, for the UE configured with UE-specific eDRX, information indicating that iDRx cycle=1.28s and that one paging hyperframe includes 1023 paging frames. In addition, the base station may configure, for the UE, a length L of 8 paging time windows through higher layer signaling. Based on configuration information, the UE may determine a start SFN of its own paging time window through the following [Equation 3].

$$[\text{Equation 3}]$$
$$\text{PTW\_start: SFN} = 128 * i_{eDRX\_CN},$$

where

- $i_{eDRX\_CN}$ = floor($UE\_ID\_H /T_{eDRX\_CN}$) mod 8)
  PTW_end: SFN = (PTW_start + L*100 - 1) mod 1024, where

- L = Paging Time Window (PTW) length (in seconds) configured by upper layers

- TeDRX_CN: UE-specific eDRX cycle in Hyper-frames, (TeDRX_CN = 2, ..., 1024 Hyper-frames) configured by upper layers.

Through [Equation 3], the UE may determine a start SFN of a PTW. In order to reduce energy consumption, the base station may configure, through higher layer signaling, for the UE, information indicating cell-specific eDRx configuration, that iDRx cycle=1.28s, and that one paging hyperframe includes 1023 paging frames.
In addition, the base station may configure, for the UE, a length L of a cell-specific paging time window through higher layer signaling. Based on configuration information, the UE may determine an SFN of a paging time window cell-specifically aligned, through the following [Equation 4].

$$[\text{Equation 4}]$$
$$\text{If network energy saving mode is configured:}$$

$$\text{PTW\_start: SFN} = 128 * i_{eDRX\_CN}, \text{ where}$$

- $i_{eDRX\_CN}$ = floor($UE\_ID\_H /T_{eDRX\_CN}$) mod subgroupsNumForPaging) PTW_end: SFN = (PTW_start + L*100 - 1) mod 1024, where

- L = Cell common Paging Time Window (PTW) length (in seconds) configured by upper layers for NES

- subgroupsNumForPaging: number of activated paging time window during NES mode.

- TeDRX_CN: Cell-specific eDRX cycle in Hyper-frames, (TeDRX_CN = 2, ..., 1024 Hyper-frames) configured by upper layers for network energy saving.

Through [Equation 4], the UE may determine a start SFN of a cell-specific PTW.
According to various embodiments of the disclosure, through [method 2], the base station may indicate the UE to perform paging monitoring within a limited cell-common PTW, thereby saving energy by maintaining an inactive state for a longer period of time.

**[Method 3]**

[Method 3] describes a method for reconfiguring a paging frame for energy saving of a base station.
According to various embodiments of the disclosure, a base station may configure paging frames and paging occasions during a UE-specific DRX cycle for paging transmission. In this case, during the configured DRX cycle, the paging frames may be configured to have an interval equal to an interval of (the DRX cycle/the number of paging frames). In addition, a paging occasion configured within a paging frame (e.g., one radio frame) may be configured to have an interval equal to an interval of (one radio frame/the number of paging occasions).
According to an embodiment, in order to process frames and occasions of UE-specific paging configured at the same interval, the base station becomes active more frequently to perform paging, thereby consuming more energy. In addition, when the number of paging frames and paging occasions is reduced, more UE power consumption may occur since many UEs are allocated to a small number of paging occasions. Considering the problems described above, a method for configuring a paging frame and a paging occasion to save energy of both a base station and a UE is described.

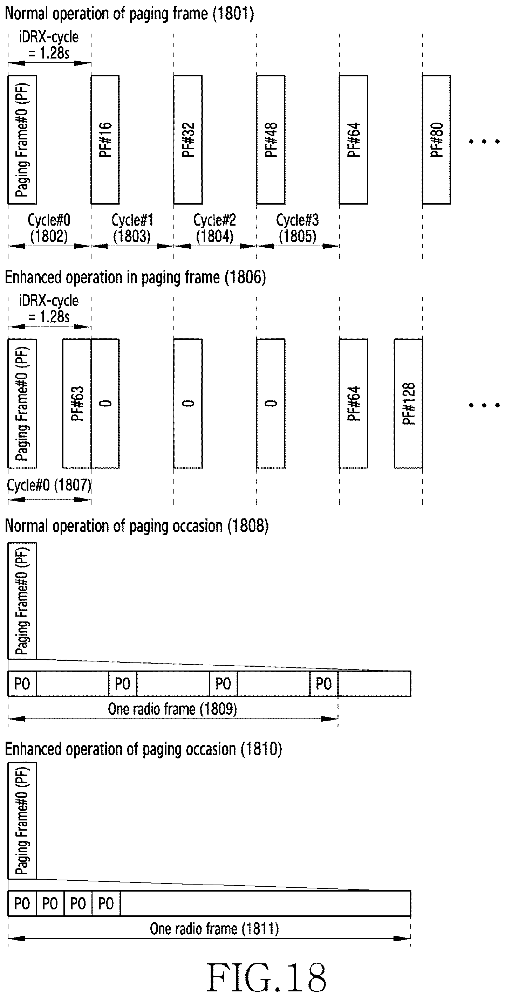

FIG. 18 illustrates a method for newly configuring a paging frame and a paging occasion, according to various embodiments of the disclosure.

Referring to FIG. 18, a base station may configure UE-specific DRX cycle=1.28sec for paging transmission, and may configure paging frames=16 and paging occasions=4 during a DRX cycle. Based on configuration information, a UE may be configured such that 16 paging frames are transmitted per DRX cycle (1801 and 1808). In this case, UEs may determine their own paging frames and paging occasions through the following [Equation 5].

$$\text{[Equation 5]}$$
SFN for the PF is determined by:

$$(\text{SFN} + \text{PF\_offset}) \bmod T = (T \text{ div } N)*(\text{UE\_ID} \bmod N)$$

Index (i_s), indicating the index of the PO is determined by:

$$i\_s = \text{floor}\,(\text{UE\_ID}/N) \bmod Ns$$

- N: number of total paging frames in T

- Ns: number of paging occasions for a PF

- PF_offset: offset used for PF determination

Through [Equation 5], the UE may determine its own paging frame, identify an index of a paging occasion, and monitor a paging occasion having the same index among POs configured at the same interval during one radio frame.

According to an embodiment, the base station may reconfigure a paging frame and a paging occasion for energy saving. The base station may configure, through higher layer signaling, the number of DRX cycles K=4 in order to reconfigure paging frames based on multiple DRX cycles 1802 to 1805 into paging frames based on one DRX cycle 1807. Through the following [Equation 6] including the configured value K, the UE may determine its own paging frame within the one DRx cycle 1807 (1806).

$$\text{[Equation 6]}$$
If network energy saving mode is configured:

SFN for the PF is determined by:

$$(\text{SFN} + (\text{PF\_offset div } K)) \bmod T*K = ((T \text{ div } N*K)*(\text{UE\_ID} \bmod N*K)$$

mod K), where

- UE_ID.

- N: number of total paging frames in T.

- K: number of DRX cycle for alignment during NES mode. (N*K should not be larger than 128)

- T: DRx cycle of the UE

If network energy saving mode is configured:
Index (i_s), indicating the index of the PO is determined by:

$$i\_s = \text{floor} \ (UE\_ID/N) \ \text{mod} \ Ns$$

- N: number of total paging frames in T

- Ns: number of paging occasions for a PF

- PF_offset: offset used for PF determination

Through [Equation 6], the UE may determine its own paging frame within one DRX cycle (1806). In addition, when an NES mode is configured, the UE may determine a paging occasion by considering a consecutive paging occasion pattern, with reference to a start SFN of its own paging frame 1811 (1810).

According to various embodiments of the disclosure, through [method 3], the base station may reconfigure a paging frame and a paging occasion pattern of the UE, thereby saving energy.

According to various embodiments of the disclosure, one or a combination of the methods of the first embodiment may be applied, and the NES mode specified in the methods may be configured through higher layer signaling or L1 signaling. In addition, the NES mode may include situations in which NES technologies which may be indirectly considered (e.g., cell DTx/DRx, WUS based NW operation, common channel/signal adaptation, spatial element, or transmission power adaptation) are applied.

In addition to the above-described methods, the base station may configure at least one of an SFN of a paging hyperframe, an SFN of a paging time window, an SFN of a paging frame, or a paging occasion pattern by using a method for directly indicating a paging index. In addition, the UE may determine a DRX cycle by prioritizing a cell-common DRX cycle, rather than the existing DRX cycle determination method (e.g., a method for determining the shortest cycle among configured DRX cycles as a DRX cycle).

**<Second embodiment>**

In a second embodiment of the disclosure, a method for indicating an eDRX/iDRX alignment and paging monitoring resource configuration of a base station for energy saving is described. According to various embodiments of the disclosure, for energy saving of the base station, methods for indicating an eDRX/iDRX alignment and paging monitoring resource configuration may be configured by one or a combination of the following methods.

**[Method 1]**

[Method 1] describes a method by which a base station configures eDRX/iDRX alignment and paging monitoring resource configuration information for a UE in an RRC connected state for energy saving.

According to an embodiment, the base station may configure eDRX/iDRX alignment and paging monitoring resource configuration information for the UE in an RRC connected/inactive state for energy saving of the base station. For example, the following paging-config may be configured through RRC signaling.

```
Paging-Config-r18 ::=          SEQUENCE {
        Cell-common-DRxcycle ENUMERATED {ms5, ms10, ms20, ms40, ms80,
ms160, spare2, spare1},
        subgroupsNumForPaging ENUMERATED { 1, 2, 4, 8, 16, 32},
        nrofDRxcycle-pagingframe ENUMERATED {2, 3, 4, 5 ..},
        Pagingoccasionpatterns CHOICE {type1, type2-NES},
        UE_group_idx INTEGER {1..8},
        Explicit_paging_idx INTEGER {1..8},
        }
...
```

Through the above-described paging-Config RRC configuration, the base station may configure at least one of Cell common eDRX iDRX cycle, subgroupsNumForPaging, the number of iDRX cycles for alignment during NES mode, new paging occasion patterns, or UE group index for a paging reconfiguration operation during an NES mode. The above-described RRC values are merely examples, and the disclosure is not limited thereto, and the values may be variously configured.

**[Method 2]**

[Method 2] describes a method by which a base station configures eDRX/iDRX alignment and paging monitoring resource configuration information for all UEs in RRC connected and RRC idle/inactive states for energy saving.

According to an embodiment, the base station may configure eDRX/iDRX alignment and paging monitoring resource configuration information for all UEs including a UE in a RRC connected, RRC idle, or RRC inactive state and a UE newly accessing a cell, through a new system information block for energy saving of the base station. More specifically, after receiving an SSB and a TRS for synchronization, a UE may identify SIB1 through the SSB. In this case, when a value indicating a paging operation in a NES mode is configured to enable and activate in a system information block (e.g., SIB1 or a new SIBX configured through SIB 1), the UE may identify that the base station is performing an operation for energy saving.

In addition, the UE may determine a function of an energy-saving operation of the base station through the system information block. For example, the UE may receive a configuration of eDRX/iDRX alignment and a paging monitoring resource from the base station through SIBXX as follows.

```
        SIBXX-IEs-r18 ::= SEQUENCE {
```

```
            Cell-common-DRxcycle ENUMERATED {ms5, ms10, ms20, ms40, ms80, ms160, spare2,
    spare1},
            subgroupsNumForPaging ENUMERATED { 1, 2, 4, 8, 16, 32},
            nrofDRxcycle-pagingframe ENUMERATED {2, 3, 4, 5 ..},
            Pagingoccasionpatterns CHOICE {type1, type2-NES},
            UE_group_idx INTEGER {1..8}
            Explicit_paging_idx INTEGER {1..8},
        }
```

The above-described system information block SIBXX may be broadcast by the base station and configured for the UE. The UE attempting an initial access may receive SIBXX through an SSB (e.g., with or without SIB1) transmitted as a synchronization signal, and identify whether eDRX/iDRX alignment and a paging monitoring resource are configured. In addition, regarding whether the base station updates SIBXX to configure eDRX/iDRX alignment and a paging monitoring resource for an RRC idle/inactive UE during an energy-saving operation of the base station, the UE may receive an indication of whether information on the SIB has been changed through a paging message from the base station.

Additionally, when the base station is able to reconfigure and change gNB eDRX/iDRX alignment and paging monitoring resource configuration information through newly defined base station energy-saving DCI (e.g., DCI scrambled with CRC using NWES-RNTI) to be cell specific or UE group specific, a part or all of the contents may be further included in the above-described SIBXX.

According to various embodiments of the disclosure, through the above- described two methods, UEs may receive configuration information for eDRX/iDRX alignment and paging monitoring resource alignment operations from the base station. Based on the configuration information, the base station may additionally configure, for a UE, whether to activate/deactivate eDRX/iDRX alignment and paging monitoring resource alignment. For example, the base station may configure the eDRX/iDRX alignment and paging monitoring resource alignment through SIB or RRC signaling, and determine to activate the same. In another method, the base station may activate/deactivate the eDRX/iDRX alignment and paging monitoring resource alignment through a paging message.

**<Third embodiment>**

A third embodiment of the disclosure describes an operation flow of a UE or a base station for configuring eDRX/iDRX alignment and a paging monitoring resource for energy saving.

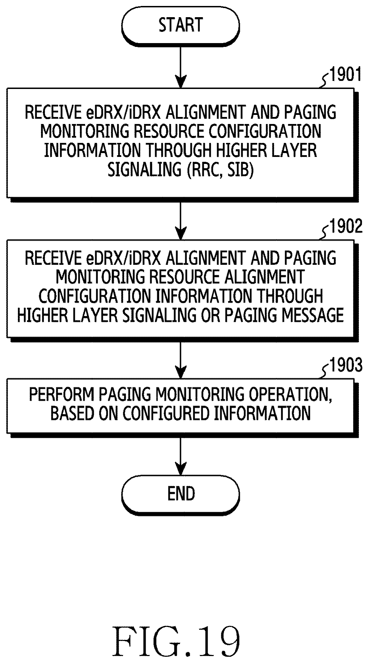

FIG. 19 illustrates an operation flow of a UE for performing an energy saving method, according to various embodiments of the disclosure.

In step 1901, a UE may receive eDRX/iDRX alignment and paging monitoring resource configuration information from a base station through higher layer signaling (e.g., RRC or SIB).

In step 1902, the UE may receive, based on the eDRX/iDRX alignment and paging monitoring resource configuration information, a configuration of whether to activate eDRX/iDRX alignment and paging monitoring resource alignment operations, through higher layer signaling or a paging message transmitted from the base station.

In step 1903, when eDRX/iDRX alignment and paging monitoring resource alignment are activated, the UE may perform paging monitoring, based on the configured eDRX/iDRX alignment and paging monitoring resource configuration information.

According to various embodiments of the disclosure, the operation of the UE illustrated in FIG. 19 is merely an example, and the UE may, of course, further perform one or a combination of the various embodiments or methods described in FIGS. 14 to 18.

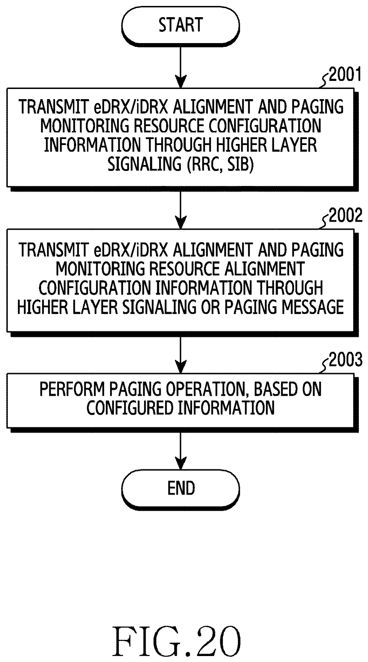

FIG. 20 illustrates an operation flow of a base station for performing an energy saving method, according to various embodiments of the disclosure.

In step 2001, a base station may transmit eDRX/iDRX alignment and paging monitoring resource configuration information to a UE through higher layer signaling (e.g., RRC or SIB).

In step 2002, the base station may configure, for the UE, whether to activate an eDRX/iDRX alignment or paging monitoring resource alignment operation, through higher layer signaling or a paging message, based on the eDRX/iDRX alignment and paging monitoring resource configuration information.

In step 2003, the base station may operate paging, based on the configured eDRX/iDRX alignment and paging monitoring resource configuration information.

According to various embodiments of the disclosure, the operation of the base station illustrated in FIG. 20 is merely an example, and the base station may, of course, further perform one or a combination of the various embodiments or methods described in FIGS. 14 to 18.

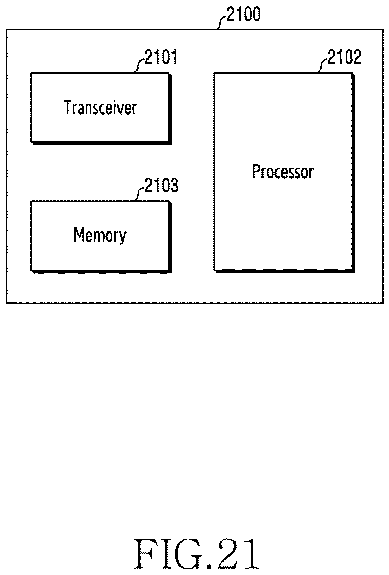

FIG. 21 illustrates a structure of a UE according to various embodiments of the disclosure.

Referring to FIG. 21, the UE 2100 may include a transceiver 2101, a controller (for example, processor) 2102, and a storage (for example, memory) 2103. The transceiver 2101, the controller 2102, and the storage 2103 of the UE 2100 may operate according to at least one or combinations of methods corresponding to the above-described embodiments. However, components of the UE 2100 are not limited to the illustrated example. According to another embodiment, the UE 2100 may include a larger or smaller number of components than the above-described components. Furthermore, in a specific case, the transceiver 2101, the controller 2102, and the storage 2103 may be implemented in the form of a single chip.

According to an embodiment, the transceiver 2101 may include a transmitter and a receiver. The transceiver 2101 may transmit/receive signals with the base station. The signals may include control information and data. The transceiver 2101 may include an RF transmitter configured to up-convert and amplify the frequency of transmitted signals, and an RF receiver configured to low-noise-amplify received signals and down-convert the frequency thereof. The transceiver 2101 may receive signals through a radio channel, output the same to the controller 2102, and transmit signals output from the controller 2102 through the radio channel.

The controller 2102 may control a series of processes such that the UE 2100 can operate according to the above-described embodiments of the disclosure. For example, the controller 2102 may perform or control the UE's operations for performing at least one or combination of the methods according to embodiments of the disclosure. The controller 2102 may include at least one processor. For example, the controller 2102 may include a communication processor (CP) which performs control for communication and an application processor (AP) which controls upper layers (for example, applications).

The storage 2103 may store control information (for example, channel estimation-related information using DMRSs transmitted in a PUSCH included in a signal acquired by the UE 2100) or data, and may have a region for storing data necessary for control of the controller 2102 and data produced during control by the controller 2102.

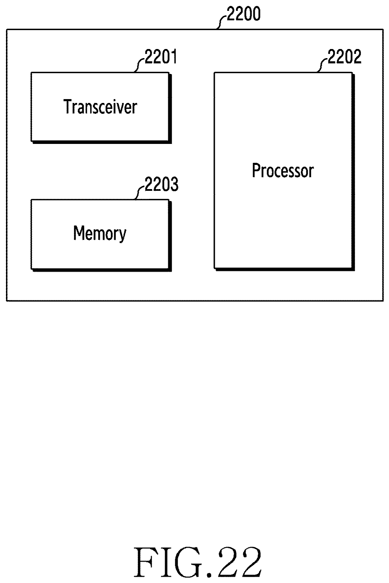

FIG. 22 illustrates a structure of a base station according to various embodiments of the disclosure.

Referring to FIG. 22, the base station 2200 may include a transceiver 2201, a controller (for example, processor) 2202, and a storage 2203. The transceiver 2201, the controller 2202, and the storage 2203 of the base station 2200 may operate according to at least one or combinations of methods corresponding to the above-described embodiments. However, components of the base station 2200 are not limited to the above-described example. According to another embodiment, the base station 2200 may include a larger or smaller number of components than the above-described components. Furthermore, in a specific case, the transceiver 2201, the controller 2202, and the storage 2203 may be implemented in the form of a single chip.

According to an embodiment, the transceiver 2201 may include a transmitter and a receiver. The transceiver 2201 may transmit/receive signals with the UE. The signals may include control information and data. The transceiver 2201 may include an RF transmitter configured to up-convert and amplify the frequency of transmitted signals, and an RF receiver configured to low-noise-amplify received signals and down-convert the frequency thereof. The transceiver 2201 may receive signals through a radio channel, output the same to the controller 2202, and transmit signals output from the controller 2202 through the radio channel.

The controller 2202 may control a series of processes such that the base station 2200 can operate according to the above-described embodiments of the disclosure. For example, the controller 2202 may perform or control the base station's operations for performing at least one or combinations of the methods according to embodiments of the disclosure. The controller 2202 may include at least one processor. For example, the controller 2202 may include a communication processor (CP) which performs control for communication and an application processor (AP) which controls upper layers (for example, applications).

The storage 2203 may store control information (for example, channel estimation-related information generated using DMRSs transmitted in a PUSCH determined by the base station 2200), data, and control information or data received from the UE, and may have a region for storing data necessary for control of the controller 2202 and data produced during control by the controller 2202.

In various embodiments, a method for reducing energy consumption of a base station by a UE in a wireless communication system may include the operations of: receiving a configuration of Cell common eDRX/iDRX for energy saving of the base station through higher layer signaling; determining a DRX cycle with reference to the configured information; receiving a configuration of Cell common paging configuration information; and determining a paging resource to be monitored through the determined DRX.

In various embodiments, a method for reducing energy consumption of a base station by the base station in a wireless communication system may include the operations of: configuring Cell common eDRX/iDRX for energy saving of the base station through higher layer signaling; configuring Cell common paging configuration information; and transmitting paging, based on the configured cell common DRX and paging configuration information.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A user equipment (UE) in a wireless communication system, the UE comprising:

a transceiver; and
a controller coupled with the transceiver,
wherein the controller is configured to:

receive, from a base station, a radio resource control (RRC) message including first information configuring a discontinuous reception (DRX) cycle, second information configuring paging monitoring, and third information configuring paging occasions;
identify at least one paging frame, based on the first information and the second information; and
receive, from the base station, a paging message on the at least one paging frame, and
wherein the third information indicates a pattern of the paging occasions that are consecutively positioned from a start point of the at least one paging frame.

2. The user equipment of claim 1, wherein the second information indicates the number of activated paging hyperframes including the at least one paging frame.

3. The user equipment of claim 1, wherein the second information indicates a number of one or more paging frames associated with an activated paging time window, and
wherein the at least one paging frame is included in the activated paging time window.

4. The user equipment of claim 1, wherein the second information indicates information associated with a number of one or more paging frames included in the DRX cycle.

5. A base station in a wireless communication system, the base station comprising:

a transceiver; and
a controller coupled with the transceiver,
wherein the controller is configured to:

transmit, to a user equipment (UE), a radio resource control (RRC) message including first information configuring a discontinuous reception (DRX) cycle, second information configuring paging monitoring, and third information configuring paging occasions;
identify at least one paging frame, based on the first information and the second information; and
transmit, to the UE, a paging message on the at least one paging frame, and
wherein the third information indicates a pattern of the paging occasions that are consecutively positioned from a start point of the at least one paging frame.

6. The base station of claim 5, wherein the second information indicates the number of activated paging hyperframes including the at least one paging frame.

7. The base station of claim 5, wherein the second information indicates a number of one or more paging frames associated with an activated paging time window, and
wherein the at least one paging frame is included in the activated paging time window.

8. The base station of claim 5, wherein the second information indicates information associated with a number of one or more paging frames included in the DRX cycle.

9. A method performed by a user equipment (UE) in a wireless communication system, the method comprising:

receiving, from a base station, a radio resource control (RRC) message including first information configuring a discontinuous reception (DRX) cycle, second information configuring paging monitoring, and third information configuring paging occasions;
identifying at least one paging frame, based on the first information and the second information; and
receiving, from the base station, a paging message on the at least one paging frame,
wherein the third information indicates a pattern of the paging occasions that are consecutively positioned from a start point of the at least one paging frame.

10. The method of claim 9, wherein the second information indicates the number of activated paging hyperframes including the at least one paging frame.

11. The method of claim 9, wherein the second information indicates a number of one or more paging frames associated with an activated paging time window, and
wherein the at least one paging frame is included in the activated paging time window.

12. The method of claim 9, wherein the second information indicates information associated with a number of one or more paging frames included in the DRX cycle.

13. A method performed by a base station in a wireless communication system, the method comprising:

   transmitting, to a user equipment (UE), a radio resource control (RRC) message including first information configuring a discontinuous reception (DRX) cycle, second information configuring paging monitoring, and third information configuring paging occasions;
   identifying at least one paging frame, based on the first information and the second information; and
   transmitting, to the UE, a paging message on the at least one paging frame,
   wherein the third information indicates a pattern of the paging occasions that are consecutively positioned from a start point of the at least one paging frame.

14. The method of claim 13, wherein the second information indicates the number of activated paging hyperframes including the at least one paging frame.

15. The method of claim 13, wherein the second information indicates a number of one or more paging frames associated with an activated paging time window, and
wherein the at least one paging frame is included in the activated paging time window.

One subframe
(110)

$N_{symb}^{subframe}$ OFDM symbols

1 OFDM symbols (102)

1 subcarrier
(103)

$k = N_{RB,x}^{max,\mu} N_{sc}^{RB} - 1$

$N_{RB}^{\mu} N_{sc}^{RB}$
subcarriers

Resource
block $N_{sc}^{RB}$
subcarriers
(104)

Resource element (k,l)
(101)

Frequency

Time

$\overline{l} = 0$

$\overline{l} = 14 \cdot 2^{\mu} - 1$

$k = 0$

FIG.1

FIG.2

FIG.3

FIG.4

FIG.5

FIG.6

FIG.7

EP 4 651 578 A1

## 1 Symbol pattern

| | |
|---|---|
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |
| 2/3 | CDM group1 |
| 0/1 | CDM group0 |

801

## 2 Symbol pattern

| | |
|---|---|
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |
| 2/3/6/7 | CDM group1 |
| 0/1/4/5 | CDM group0 |

802

## 1 Symbol pattern

| | |
|---|---|
| 4/5 | CDM group2 |
| 4/5 | |
| 2/3 | CDM group1 |
| 2/3 | |
| 0/1 | CDM group0 |
| 0/1 | |
| 4/5 | CDM group2 |
| 4/5 | |
| 2/3 | CDM group1 |
| 2/3 | |
| 0/1 | CDM group0 |
| 0/1 | |

803

## 2 Symbol pattern

| | |
|---|---|
| 4/5/10/11 | CDM group2 |
| 4/5/10/11 | |
| 2/3/8/9 | CDM group1 |
| 2/3/8/9 | |
| 0/1/6/7 | CDM group0 |
| 0/1/6/7 | |
| 4/5/10/11 | CDM group2 |
| 4/5/10/11 | |
| 2/3/8/9 | CDM group1 |
| 2/3/8/9 | |
| 0/1/6/7 | CDM group0 |
| 0/1/6/7 | |

804

# FIG.8

Independent DMRS channel estimation

FIG.9

Reconfiguration of ssb-PositionsInBurst bitmap (1001):

e.g.,) ssb-PositionsInBurst: [11110000] (1002)

FIG.10

Mode 1: Normal mode (1101)

BW: 100 MHz

NWES mode for all UEs: ($BW_A$)

$PSD_A$

$PSD_B$

BWP adaptation

Mode 2: NWES mode (1102)

BW: 40 MHz

Transmission bandwidth ($BW_A$)

$PSD_A$

$PSD_B$

BWP alignment for NWES (1103)

UE #0

BW

B W P #1

B W P #3

B W P #2

B W P #0

UE #1

BW

B W P #1

B W P #2

B W P #3

B W P #0

BWP adaptation

NWES mode for all UEs:

BW

B W P #0

FIG.11

DRX alignment for NWES (1201)

FIG.12

EP 4 651 578 A1

TxRU adaptation for NWES(1301)

Normal mode of 64 TxRUs

TxRU adaptation

NWES mode of 32 TxRUs

gNB

gNB

FIG.13

Discontinuous transmission (DTx) (1401)

FIG.14

Concept of gNB WUS (1501)

FIG.15

eDRX cycle = 2 PHs (20.48s) (1601)

| Normal (1602) | Paging Hyperframe#0 (PH) | PH#1 | PH#2 | PH#3 | · · · |

eDRX cycle = 2 PHs (20.48s)

| NES mode (1603) | Paging Hyperframe#0 (PH) | PH#1 | PH#2 | PH#3 | · · · |

# FIG.16

FIG.17

Normal operation of paging frame (1801)

Enhanced operation in paging frame (1806)

Normal operation of paging occasion (1808)

Enhanced operation of paging occasion (1810)

FIG.18

START

RECEIVE eDRX/iDRX ALIGNMENT AND PAGING MONITORING RESOURCE CONFIGURATION INFORMATION THROUGH HIGHER LAYER SIGNALING (RRC, SIB) — 1901

RECEIVE eDRX/iDRX ALIGNMENT AND PAGING MONITORING RESOURCE ALIGNMENT CONFIGURATION INFORMATION THROUGH HIGHER LAYER SIGNALING OR PAGING MESSAGE — 1902

PERFORM PAGING MONITORING OPERATION, BASED ON CONFIGURED INFORMATION — 1903

END

FIG.19

START

2001

TRANSMIT eDRX/iDRX ALIGNMENT AND PAGING
MONITORING RESOURCE CONFIGURATION
INFORMATION THROUGH HIGHER LAYER
SIGNALING (RRC, SIB)

2002

TRANSMIT eDRX/iDRX ALIGNMENT AND PAGING
MONITORING RESOURCE ALIGNMENT
CONFIGURATION INFORMATION THROUGH
HIGHER LAYER SIGNALING OR PAGING MESSAGE

2003

PERFORM PAGING OPERATION, BASED ON
CONFIGURED INFORMATION

END

FIG.20

2100

2101

Transceiver

2102

Processor

2103

Memory

# FIG.21

FIG.22

## INTERNATIONAL SEARCH REPORT

| International application No. |
|---|
| **PCT/KR2024/002252** |

| A. | CLASSIFICATION OF SUBJECT MATTER |
|---|---|

**H04W 52/02**(2009.01)i; **H04W 68/02**(2009.01)i; **H04W 72/231**(2023.01)i; **H04W 76/28**(2018.01)i

According to International Patent Classification (IPC) or to both national classification and IPC

| B. | FIELDS SEARCHED |
|---|---|

Minimum documentation searched (classification system followed by classification symbols)

H04W 52/02(2009.01); H04W 68/00(2009.01); H04W 68/02(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DRX(discontinuous reception), 사이클(cycle), 페이징 모니터링(paging monitoring), 페이징 오케이션(paging occasion), 페이징 프레임(paging frame), RRC(radio resource control)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0163356 A (SAMSUNG ELECTRONICS CO., LTD.) 09 December 2022 (2022-12-09) See paragraphs [0084], [0093], [0122], [0133]-[0140] and [0197]; claims 1 and 4; and figure 3. | 1-2,4-6,8-10,12-14 |
| Y | | 3,7,11,15 |
| Y | KR 10-2018-0122656 A (SAMSUNG ELECTRONICS CO., LTD.) 13 November 2018 (2018-11-13) See paragraph [0036]. | 3,7,11,15 |
| A | WO 2022-205359 A1 (ZTE CORPORATION) 06 October 2022 (2022-10-06) See claims 1-69. | 1-15 |
| A | KR 10-2023-0005991 A (LG ELECTRONICS INC.) 10 January 2023 (2023-01-10) See paragraphs [0156]-[0371]; and figures 11-14. | 1-15 |
| A | US 2018-0279256 A1 (NOKIA SOLUTIONS AND NETWORKS OY) 27 September 2018 (2018-09-27) See paragraphs [0008]-[0080]. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 June 2024** | **05 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2024/002252** | | | |
|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2022-0163356 | A | 09 December 2022 | EP | 4115666 | A1 | 11 January 2023 |
| | | | | US | 11659519 | B2 | 23 May 2023 |
| | | | | US | 2021-0314914 | A1 | 07 October 2021 |
| | | | | WO | 2021-201630 | A1 | 07 October 2021 |
| KR | 10-2018-0122656 | A | 13 November 2018 | CN | 109076495 | A | 21 December 2018 |
| | | | | CN | 114698102 | A | 01 July 2022 |
| | | | | KR | 10-2363549 | B1 | 16 February 2022 |
| | | | | US | 10085233 | B2 | 25 September 2018 |
| | | | | US | 10721762 | B2 | 21 July 2020 |
| | | | | US | 11265911 | B2 | 01 March 2022 |
| | | | | US | 2017-0290048 | A1 | 05 October 2017 |
| | | | | US | 2017-0303235 | A1 | 19 October 2017 |
| | | | | US | 2020-0236703 | A1 | 23 July 2020 |
| | | | | WO | 2017-171454 | A1 | 05 October 2017 |
| | | | | WO | 2017-171502 | A1 | 05 October 2017 |
| WO | 2022-205359 | A1 | 06 October 2022 | CN | 116569612 | A | 08 August 2023 |
| | | | | EP | 4190043 | A1 | 07 June 2023 |
| | | | | KR | 10-2023-0164644 | A | 04 December 2023 |
| | | | | US | 2023-0292288 | A1 | 14 September 2023 |
| KR | 10-2023-0005991 | A | 10 January 2023 | US | 11825445 | B2 | 21 November 2023 |
| | | | | US | 2023-0093248 | A1 | 23 March 2023 |
| | | | | US | 2023-0413232 | A1 | 21 December 2023 |
| | | | | WO | 2022-250375 | A1 | 01 December 2022 |
| US | 2018-0279256 | A1 | 27 September 2018 | EP | 3354088 | A1 | 01 August 2018 |
| | | | | US | 10165545 | B2 | 25 December 2018 |
| | | | | WO | 2017-049625 | A1 | 30 March 2017 |

Form PCT/ISA/210 (patent family annex) (July 2022)